# EUROPEAN PATENT APPLICATION

(11) **EP 4 852 356 A1**
(43) Date of publication of application: **09.12.2026**
(21) Application number: 25767299.8
(22) Date of filing: 03.03.2025
(51) Int. Cl.: H04L 1/00

(54) **COMMUNICATION METHOD AND COMMUNICATION APPARATUS**

(30) Priority: 08.03.2024 CN 202410268825
(71) Applicant: HUAWEI TECHNOLOGIES CO., LTD., Shenzhen, Guangdong 518129 (CN)
(72) Inventor: LIN, Wei, Shenzhen, Guangdong 518129 (CN); GAN, Ming, Shenzhen, Guangdong 518129 (CN); YU, Jian, Shenzhen, Guangdong 518129 (CN); LI, Ying, Shenzhen, Guangdong 518129 (CN); XIN, Yan, Shenzhen, Guangdong 518129 (CN)
(74) Representative: Huawei European IPR
(86) International application number: PCT/CN2025/080224
(87) International publication number: WO 2025/185561

(57) **Abstract**

A communication method and a communication apparatus are provided. The method includes: determining a number of coded bits corresponding to to-be-coded information, and determining a length of an LDPC codeword based on the number of coded bits. The length of the LDPC codeword and the number of coded bits satisfy the following condition: when the number of coded bits is within a first value range, the length of the LDPC codeword is a first code length; or when the number of coded bits is within a second value range, if the number of coded bits is greater than or equal to a sum of a bit length corresponding to the to-be-coded information and a product of X and (1-R), the length of the LDPC codeword is the first code length; or if the number of coded bits is less than the sum of the bit length corresponding to the to-be-coded information and the product of X and (1-R), the length of the LDPC codeword is a second code length. R is a coding rate, and X is a common multiple of denominators of all coding rates supported by a system. A maximum LDPC code length supported by the system is 1944×n, where n is an integer greater than or equal to 2, and both the first code length and the second code length are less than or equal to 1944×n; and/or X=Y+Zt, where Z is a least common multiple of the denominators of all the coding rates supported by the system, all the coding rates include 7/8, and t is an integer greater than or equal to -2 and less than or equal to 2, and Y makes a proportion of parity bits punctured in a coding process to all parity bits less than a first threshold.

## Description

### CROSS-REFERENCE TO RELATED APPLICATIONS

This application claims priority to Chinese Patent Application No. 202410268825.5, filed with the China National Intellectual Property Administration of the People's Republic of China on March 8, 2024 and entitled "COMMUNICATION METHOD AND COMMUNICATION APPARATUS", which is incorporated herein by reference in its entirety.

### TECHNICAL FIELD

This application relates to the field of communication technologies, and in particular, to a communication method and a communication apparatus.

### BACKGROUND

Low-density parity-check (low-density parity-check, LDPC) codes have advantages such as good performance and low complexity, and can be used for channel coding. Coding performance of the LDPC code increases as a code length increases. Therefore, an LDPC code with a maximum code length is usually selected. However, a coding process includes a puncturing operation (that is, several parity bits are not transmitted). The puncturing operation causes an increase in an actual coding rate, and causes a performance loss. As a result, selecting the LDPC code with a maximum code length may cause relatively low error control performance. How to determine a length of an LDPC codeword needs to be urgently explored.

### SUMMARY

Embodiments of this application provide a communication method and a communication apparatus, to determine an LDPC code with an appropriate length to improve error control performance.

To achieve the foregoing objective, the following technical solutions are used in embodiments of this application.

According to a first aspect, a communication method is provided. The method may be applied to a transmit device. For example, the transmit device is a first device. The method is applied to the first device or a component (for example, a circuit, a chip, or a chip system) in the first device. For ease of description, an example in which the method is applied to the first device is used below.

The method includes: The first device determines a number of coded bits corresponding to to-be-coded information, and determines a length of an LDPC codeword based on the number of coded bits. The to-be-coded information includes data information and parity information. The length of the LDPC codeword and the number of coded bits satisfy the following condition: when the number of coded bits is within a first value range, the length of the LDPC codeword is a first code length; or when the number of coded bits is within a second value range, if the number of coded bits is greater than or equal to a sum of a bit length corresponding to the to-be-coded information and a first value, the length of the LDPC codeword is the first code length; or if the number of coded bits is less than the sum of a bit length corresponding to the to-be-coded information and the first value, the length of the LDPC codeword is a second code length. The first value is a product of X and (1-R), where R is a coding rate, and X is a common multiple of denominators of all coding rates supported by a system. A maximum length of the LDPC codeword supported by the system is 1944×n, where n is an integer greater than or equal to 2, and both the first code length and the second code length are less than or equal to 1944×n; and/or X=Y+Zt, where Z is a least common multiple of the denominators of all the coding rates supported by the system, all the coding rates include 7/8, and t is an integer greater than or equal to -2 and less than or equal to 2. Y makes a proportion of parity bits punctured in a coding process to all parity bits less than a first threshold.

According to a second aspect, another communication method is provided. The method may be applied to a receive device. For example, the receive device is a second device. The method is applied to the second device or a component (for example, a circuit, a chip, or a chip system) in the second device. For ease of description, an example in which the method is applied to the second device is used below.

The method includes: The second device receives information from a first device; the second device performs stream parsing on the information to obtain at least one LDPC codeword; and the second device decodes the information based on the at least one LDPC codeword.

The methods provided in the first aspect and the second aspect provide a manner of determining a length of an LDPC codeword (referred to as an LDPC code length for short) for a case with a larger LDPC code length (for example, 1944×2) and/or more coding rates (for example, including 7/8). In a scenario with a larger LDPC code length and/or more coding rates, an LDPC code length is determined by using the method provided in embodiments of this application, so that a proportion of parity bits punctured in a coding process to all parity bits is less than a threshold, thereby ensuring error control performance of an LDPC code.

In a possible implementation, the length of the LDPC codeword, a number *N*_{CW} of LDPC codewords, and the number *N*_{avbits} of coded bits corresponding to the to-be-coded information satisfy a specific relationship, for example, including one or more relationships in one or more of the following examples.

Example 1: When the maximum length of the LDPC codeword supported by the system is 1944×n, and the number of LDPC codewords is 1, the first value range and the first code length satisfy the following relationship: the first value range is (third code length, fourth code length], and the first code length is a maximum LDPC code length supported by the system. All LDPC code lengths supported by the system are sorted in ascending order, the third code length is a second-to-last LDPC code length after sorting, and the fourth code length is a last LDPC code length after sorting.

It can be learned from Example 1 that: the first value range is (1944×(n-1), 1944×n], and the first code length is 1944×n. In Example 1, when the maximum code length of the LDPC code is at least 1944×2 and *N*_{avbits} is within the first value range (for example, (1944×(n-1), 1944×n]), the LDPC code length may be 1944×n. For example, when 1944<*N*_{avbits}≤3888, and the number of LDPC codewords is 1, the LDPC code length may be 3888. In this way, a proportion of parity bits punctured in a coding process to all parity bits may be less than a threshold (for example, 30%), thereby ensuring relatively good error control performance of the LDPC code.

Example 2: When the maximum length of the LDPC codeword supported by the system is 1944×n, and the number of LDPC codewords is a ratio of the data bit length *N_{pld}* corresponding to the to-be-coded information to (1944×n×R), the first value range and the first code length satisfy any of the following relationships: the first value range is (third code length+fourth code length, +∞], and the first code length is the fourth code length; or the first value range is (fourth code length-third code length, +∞], and the first code length is the fourth code length; or the first value range is (fourth code length-fifth code length, +∞], and the first code length is the fourth code length. All LDPC code lengths supported by the system are sorted in ascending order, the third code length is a second-to-last LDPC code length after sorting, the fourth code length is a last LDPC code length after sorting, and the fifth code length is a third-to-last code length in the LDPC code lengths supported by the system.

It can be learned from Example 2 that: the second value range is (1944×(n+1), +∞], and the first code length is 1944×n; or the second value range is (1944×(n-1), +∞], and the first code length is 1944×n; or the second value range is (1944×(n+1)-648, +∞], and the first code length is 1944×n; or the second value range is (1944×(n+2), +∞], and the first code length is 1944×n.

A difference from Example 1 lies in that Example 2 provides a relationship between *N*_{avbits}, *N*_{CW}, and an LDPC code length for a case in which the number of LDPC codewords is *N_{pld}*/1944×n×R. Any LDPC code length that satisfies any relationship in Example 2 can ensure relatively good error control performance of the LDPC code.

Example 3: When the maximum length of the LDPC codeword supported by the system is 1944×n, Z=12, and the number of LDPC codewords is 1, the second value range and the first code length satisfy the following relationship: the second value range is (fifth code length, third code length], and if the number *N*_{avbits} of coded bits is greater than or equal to the sum of the bit length *N_{pld}* corresponding to the to-be-coded information and the first value, the first code length is a maximum LDPC code length supported by the system. All LDPC code lengths supported by the system are sorted in ascending order, the third code length is a second-to-last LDPC code length after sorting, and the fifth code length is a third-to-last code length in the LDPC code lengths supported by the system.

It can be learned from Example 3 that: when n=2, the second value range is (1944×(n+1)-648, 1944×(n-1)], X=2916+12t, and the first code length is 1944×n; or when n=3, the second value range is (1944, 1944×2], X=5832+12t, and the first code length is 1944×n.

Example 3 shows a manner of determining an LDPC code length based on *N*_{avbits} and *N_{pld}.* As described above, when the maximum code length of the LDPC code is at least 1944×n, if *N*_{avbits} is within (1944×(n+1)-648, 1944×(n-1)], and X=2916+12t, a proportion of parity bits punctured in a coding process to all parity bits in may be less than a threshold (for example, 25%), thereby ensuring relatively good error control performance of the LDPC code.

Example 4: When the maximum length of the LDPC codeword supported by the system is 1944×n, Z=12, and the number of LDPC codewords is 2, the second value range and the first code length satisfy the following relationship: the second value range is (fourth code length, fourth code length+third code length], and if *N*_{avbits} is greater than or equal to the sum of *N_{pld}* and the first value, the first code length is a maximum LDPC code length supported by the system. All LDPC code lengths supported by the system are sorted in ascending order, the third code length is a second-to-last LDPC code length after sorting, and the fourth code length is a last code length in the LDPC code lengths supported by the system.

It can be learned from Example 4 that: when n=2, the second value range is (1944×n, 1944×(n+1)], X=1944×(n+1)+12t, and the first code length is 1944×n; or when n=3, the second value range is (1944×n, 1944×(n+2)], X=1944×(n+2)+12t, and the first code length is 1944×n.

A difference from Example 3 lies in that Example 3 provides a relationship between *N*_{avbits}, *N*_{CW}, and an LDPC code length for a case in which the number of LDPC codewords is 2. Any LDPC code length that satisfies any relationship in Example 2 can ensure relatively good error control performance of the LDPC code.

Example 5: When the maximum length of the LDPC codeword supported by the system is 1944×n, Z=12i, where i is an integer greater than or equal to 2, and the number of LDPC codewords is 1, the second value range and the first code length satisfy the following relationship: the second value range is (fifth code length, third code length], and if *N*_{avbits} is greater than or equal to the sum of *N_{pld}* and the first value, and X=Y+12i×t, the first code length is a maximum LDPC code length supported by the system. All LDPC code lengths supported by the system are sorted in ascending order, the third code length is a second-to-last LDPC code length after sorting, and the fifth code length is a third-to-last code length in the LDPC code lengths supported by the system.

It can be learned from Example 5 that: the second value range includes (1944×(n+1)-648, 1944×(n-1)], X=Y+12i×t, and the first code length is 1944×n, where i=2 or 3, and Y includes 2928; i=3, and Y includes 2916; or i=3, and Y includes 2952.

Example 5 provides a relationship between *N*_{avbits}, *N*_{CW}, *N_{pld},* and an LDPC code length for a case in which the maximum code length of the LDPC code is at least 1944×2, and all the coding rates supported by the system include at least 7/8, to ensure relatively good error control performance of the LDPC code.

Example 6: The second value range and the first code length further satisfy the following relationship: the second value range includes (0, 648], X=Y+12i×t, and the first code length is 1296, where i=2, and Y includes 912; i=3, and Y includes 936; or i=6, and Y includes 936; or the second value range includes (648, 1296], X=Y+12i×t, and the first code length is 1944, where i=2, and Y includes 1363; i=3, and Y includes 1376; or i=6, and Y includes 1512.

Compared with Example 5, Example 6 further provides a manner of determining an LPDC code length when the second value range is separately (0, 648] and (648, 1296].

Example 7: When the maximum length of the LDPC codeword supported by the system is 1944×n, Z=12i, where i is an integer greater than or equal to 2, and the number of LDPC codewords is 2, the second value range and the first code length satisfy the following relationship: the second value range is (fourth code length, fourth code length+third code length], X=Y+12i×t, and the first code length is the fourth code length; or the second value range is (third code length, fourth code length-third code length], X=Y+12i×t, and the first code length is the third code length. All LDPC code lengths supported by the system are sorted in ascending order, the third code length is a second-to-last LDPC code length after sorting, and the fourth code length is a last code length in the LDPC code lengths supported by the system.

It can be learned from Example 7 that: the second value range is (1944×n, 1944×(n+1)], X=Y+12i×t, and the first code length is 1944×n; or the second value range is (1944×n, 1944×(n+1)-648], X=Y+12i×t, and the first code length is 1944×(n-1).

A difference from Example 5 lies in that Example 7 provides a relationship between *N*_{avbits}, *N*_{CW}, *N_{pld},* and an LDPC code length for a case in which the number of LDPC codewords is 2. Any LDPC code length that satisfies any relationship in Example 7 can ensure relatively good error control performance of the LDPC code.

According to a third aspect, an embodiment of this application provides a communication apparatus. The communication apparatus has a function of implementing the behavior in the method example in the first aspect or the second aspect. For beneficial effects, refer to related descriptions in the first aspect or the second aspect. Details are not described herein again. For example, the communication apparatus may be the first device in the first aspect, or the communication apparatus may be an apparatus that can support the first device in implementing a function required by the method provided in the first aspect. For example, the communication apparatus may be a chip or a chip system in the first device. For example, the communication apparatus may be the second device in the second aspect, or the communication apparatus may be an apparatus that can support the second device in implementing a function required by the method provided in the second aspect. For example, the communication apparatus may be a chip or a chip system in the second device.

In a possible design, the communication apparatus includes a wireless fidelity (wireless fidelity, Wi-Fi) chip.

In a possible design, the communication apparatus includes a corresponding means (means) or module configured to perform the method in the first aspect. For example, the communication apparatus includes a processing unit (sometimes also referred to as a processing module or a processor) and/or a transceiver unit (sometimes also referred to as a transceiver module or a transceiver). The transceiver unit can implement a sending function and a receiving function. When the transceiver unit implements the sending function, the transceiver unit may be referred to as a sending unit (sometimes also referred to as a sending module). When the transceiver unit implements the receiving function, the transceiver unit may be referred to as a receiving unit (sometimes also referred to as a receiving module). The sending unit and the receiving unit may be a same functional unit, the functional unit is referred to as the transceiver unit, and the functional unit can implement the sending function and the receiving function. Alternatively, the sending unit and the receiving unit may be different functional units, and the transceiver unit is a general term for these functional units. These units (modules) may perform corresponding functions in the method example in the first aspect or the second aspect. For details, refer to detailed descriptions in the method examples. Details are not described herein again.

According to a fourth aspect, an embodiment of this application provides a communication apparatus. The communication apparatus may be the communication apparatus in the third aspect of the foregoing embodiment, or may be a chip or a chip system disposed in the communication apparatus in the third aspect. The communication apparatus includes a communication interface and a processor, and optionally, further includes a memory. The memory is configured to store a computer program, instructions, or data, and the processor is coupled to the memory and the communication interface. When the processor reads the computer program, the instructions, or the data, the communication apparatus is enabled to perform the method performed by the first device in the foregoing method embodiment. For example, the communication apparatus may be the first device or a functional module in the first device, for example, a Wi-Fi chip. Alternatively, when the processor reads the computer program, the instructions, or the data, the communication apparatus is enabled to perform the method performed by the second device in the foregoing method embodiment. For example, the communication apparatus may be the second device or a functional module in the second device, for example, a Wi-Fi chip.

According to a fifth aspect, an embodiment of this application provides a chip system. The chip system includes a processor, and may further include a communication interface, and is configured to implement the method in the first aspect or the second aspect. Optionally, the chip system further includes a memory. The memory is configured to store a computer program (which may also be referred to as code or instructions). The processor is configured to invoke the computer program from the memory and run the computer program, so that a device on which the chip system is installed performs the method in any one of the first aspect or the second aspect and the possible implementations of the first aspect or the second aspect. The chip system may include a chip, or may include a chip and another discrete component.

According to a sixth aspect, an embodiment of this application provides a communication apparatus. The communication apparatus includes an input/output interface and a logic circuit. The input/output interface is configured to input and/or output information. The input/output interface may be an interface circuit, an output circuit, an input circuit, a pin, a related circuit, or the like. The logic circuit is configured to perform the method in the first aspect or the second aspect.

In a specific implementation process, the communication apparatus may be a chip, the input circuit may be an input pin, the output circuit may be an output pin, and the logic circuit may be a transistor, a gate circuit, a trigger, various logic circuits, or the like. An input signal received by the input circuit may be received and input by, for example, but not limited to, a receiver, and a signal output by the output circuit may be output to, for example, but not limited to, a transmitter and transmitted by the transmitter. In addition, the input circuit and the output circuit may be a same circuit, and the circuit separately serves as the input circuit and the output circuit at different moments. Specific implementations of the input/output interface and the logic circuit are not limited in this application.

In an implementation, when the communication apparatus is a wireless communication device, the wireless communication device may be a terminal device such as a mobile phone, or the wireless communication device may be a network device such as a base station, or the wireless communication device may be a Wi-Fi device such as a router. The interface circuit may be a radio frequency processing chip in the wireless communication device, and a processing circuit may be a baseband processing chip in the wireless communication device.

According to a seventh aspect, an embodiment of this application provides a communication system. The communication system includes a first device and a second device. The first device is configured to implement a function of the method in the first aspect, and may encode to-be-coded information and then send coded to-be-coded information to the second device. The second device is configured to implement a function of the method in the second aspect, and may decode information from the first device to obtain to-be-coded information.

According to an eighth aspect, an embodiment of this application further provides a computer-readable storage medium. The computer-readable storage medium is configured to store a computer program or instructions. When the computer program or the instructions are run, the method in any one of the first aspect or the second aspect and the implementations of the first aspect or the second aspect is implemented.

According to a ninth aspect, an embodiment of this application further provides a computer program product including instructions. When the computer program product runs on a computer, the method in any one of the first aspect or the second aspect and the implementations of the first aspect or the second aspect is implemented.

For beneficial effects of the second aspect to the ninth aspect and the implementations of the third aspect to the ninth aspect, refer to the descriptions of the beneficial effects of the first aspect and any implementation of the first aspect.

### BRIEF DESCRIPTION OF DRAWINGS

FIG. 1 is a diagram of an architecture of a communication system according to an embodiment of this application;
FIG. 2A is a diagram of an LDPC code parity-check matrix according to an embodiment of this application;
FIG. 2B is a Tanner graph of an LDPC code according to an embodiment of this application;
FIG. 3A is a diagram of an LDPC code parity-check matrix with a coding rate of 1/2 and a code length of 648 according to an embodiment of this application;
FIG. 3B is a diagram of a cyclic shift matrix P1 according to an embodiment of this application;
FIG. 4 is a diagram of an LDPC coding procedure in a WLAN according to an embodiment of this application;
FIG. 5 is a schematic flowchart of a communication method according to an embodiment of this application;
FIG. 6 is a diagram of a structure of a communication apparatus according to an embodiment of this application; and
FIG. 7 is a diagram of another structure of a communication apparatus according to an embodiment of this application;

### DESCRIPTION OF EMBODIMENTS

For a case in which a larger LDPC code length and/or a higher coding rate may be introduced in the future, embodiments of this application provide a manner of determining an LDPC code length. According to the solutions provided in this application, a performance loss caused by an inappropriate LDPC code length can be reduced, and error control performance of an LDPC code can be improved. An LDPC code length, that is, a length of an LDPC codeword, may be referred to as an LDPC codeword length for short, or may be referred to as an LDPC code length for short.

The technical solutions provided in embodiments of this application are applicable to a local area network (local area network, LAN), and in particular, to a wireless local area network (wireless local area network, WLAN), for example, a WLAN that uses any protocol in the Institute of Electrical and Electronics Engineers (Institute of Electrical and Electronics Engineers, IEEE) 802.11 series of protocols. The WLAN may include one or more basic service sets (basic service set, BSS). Network nodes in the basic service set include an access point (access point, AP) and a station (station, STA). Embodiments of this application may be further applied to a wireless local area network system that supports the IEEE 802.11ax next generation wireless fidelity (wireless fidelity, Wi-Fi) protocol, for example, 802.11 series of protocols such as 802.11be, 802.11bn, and Wi-Fi AI, and may be further applied to an ultra-wideband (ultra-wideband, UWB)-based wireless personal area network system and a perception (sensing) system.

Embodiments of this application may also be applied to a communication system related to the 3rd generation partnership project (the 3rd generation partnership project, 3GPP), for example, a long term evolution (long term evolution, LTE) or a fifth generation (the sixth generation, 5G) mobile communication system (for example, a new radio (new radio, NR) communication system), or may be applied to another next generation mobile communication system, for example, a sixth generation (6G) communication system, or other similar communication systems. The other similar communication systems may include a device-to-device (device-to-device, D2D), Wi-Fi, an Internet of Vehicles, an Internet of Things (Internet of Things, IoT) system, a narrowband Internet of Things (narrowband Internet of Things, NB-IoT) system, and the like. The Internet of Vehicles, for example, vehicle to everything (vehicle to everything, V2X) or vehicle-to-vehicle (vehicle-to-vehicle, V2V), may be used in a communication system such as intelligent driving, assisted driving, or intelligent connected vehicles.

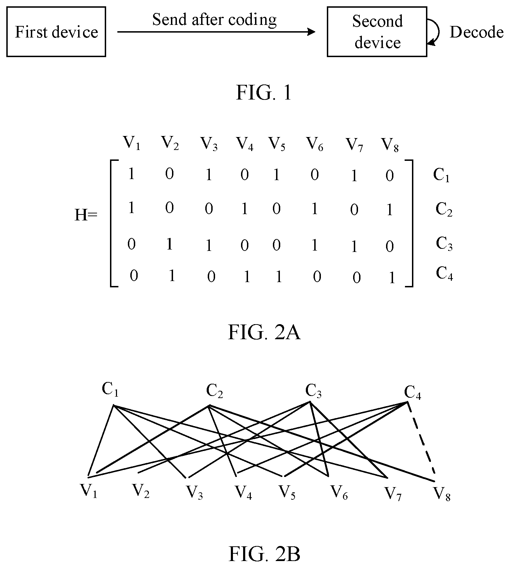

FIG. 1 shows a communication system to which an embodiment of this application is applicable. The communication system includes a first device and a second device. The first device can communicate with the second device. For example, the first device is a transmit end of data, and the second device is a receive end of data. When sending data, the first device may perform an operation such as encoding the data. After receiving data from the first device, the second device may perform an operation such as decoding the data.

Types of the first device and the second device are not limited in embodiments of this application. For example, the first device may be a network device, and correspondingly, the second device may be a terminal device or a network device; or the first device may be a terminal device, and the second device may be a network device or a terminal device. The network device in embodiments of this application may be a radio access network (radio access network, RAN) node, and the RAN node may be a base station (base station), an evolved NodeB (evolved NodeB, eNodeB), an access point (access point, AP), a transmission reception point (transmission reception point, TRP), a next generation NodeB (next generation NodeB, gNB), a next generation NodeB in a 6G mobile communication system, a base station in a future mobile communication system, or the like. The RAN node may be a macro base station, a micro base station, an indoor base station, a relay node, a donor node/host node, a radio controller, or the like. Alternatively, the RAN node may be a server, a wearable device, a vehicle, a vehicle-mounted device, or the like. For example, a RAN node in a V2X technology may be a roadside unit (roadside unit, RSU). An AP is equivalent to a bridge that connects a wired network and a wireless network. A main function of the AP is connecting all clients in the wireless network, and connecting the wireless network to an Ethernet. The AP may serve as a hub of the communication system, and may be a communication device with a Wi-Fi chip, for example, a base station, a router, a gateway, a repeater, a communication server, a switch, or a bridge. The AP may support WLAN standards such as the 802.11be standard or a next generation of 802.11be such as Wi-Fi 8. The AP may also support WLAN standards such as 802.11ax, 802.11ac, 802.11n, 802.11g, 802.11b, and 802.11a.

The terminal device is also referred to as a terminal, user equipment (user equipment, UE), a mobile station, a mobile terminal, or the like. In embodiments of this application, any device that can perform data communication with a base station may be considered as the terminal device. The terminal device may be widely used in various scenarios, for example, D2D communication, V2X communication, machine-type communication (machine-type communication, MTC), an IoT, virtual reality, augmented reality, industrial control, self driving, telemedicine, a smart grid, smart furniture, smart office, smart wear, smart transportation, or a smart city. For example, the terminal device may be a mobile phone, a computer, a mobile Internet device (mobile Internet device, MID), a station (station, STA), a wearable device, a virtual reality (virtual reality, VR) device, an augmented reality (augmented reality, AR) device, a robotic arm, a camera, a robot, a smart home device (for example, a television, an air conditioner, a robot vacuum cleaner, a speaker, or a set-top box), a relay (relay), customer premise equipment (customer premise equipment, CPE), a vehicle, an uncrewed aerial vehicle, a helicopter, an airplane, a ship, a robot, a robotic arm, a smart home device, or the like. A specific technology and a specific device form used by the terminal device are not limited in embodiments of this application. For example, the STA may be a mobile phone supporting a Wi-Fi communication function, a tablet computer supporting a Wi-Fi communication function, a set-top box supporting a Wi-Fi communication function, a smart television supporting a Wi-Fi communication function, a smart wearable device supporting a Wi-Fi communication function, a vehicle-mounted communication device supporting a Wi-Fi communication function, a computer supporting a Wi-Fi communication function, or the like. The STA may be a router, a switch, a bridge, and the like. The STA may support the 802.11be standard, and may also support a plurality of WLAN standards of the 802.11 family, such as 802.11ax, 802.11ac, 802.11n, 802.11g, 802.11b, 802.11a, 802.11be, Wi-Fi 7, Wi-Fi 8, or a next generation thereof.

If the various terminal devices described above are located on a vehicle (for example, placed/mounted in the vehicle), the terminal devices may all be considered as vehicle-mounted terminal devices. The vehicle-mounted terminal device may be a vehicle-mounted module, a vehicle-mounted assembly, a vehicle-mounted component, a vehicle-mounted chip, or an onboard unit that is built in a vehicle as one or more components or units. The vehicle may implement the methods in this application through the built-in vehicle-mounted module, vehicle-mounted assembly, vehicle-mounted component, vehicle-mounted chip, or onboard unit. The vehicle-mounted terminal device may be an entire vehicle device, a vehicle-mounted module, a vehicle, an onboard unit (onboard unit, OBU), a roadside unit (roadside unit, RSU), an in-vehicle infotainment system (also referred to as an in-vehicle sending unit) (telematics box, T-box), a chip, a system on chip (system on chip, SoC), or the like. The chip or the SoC may be installed in the vehicle, the OBU, the RSU, or the T-box.

To facilitate understanding of the solutions provided in embodiments of this application, some related content, terms, or nouns in this application are briefly described first.

### I. LDPC code

An LDPC code parity-check matrix is a sparse matrix. To be specific, a number of non-zero elements in the matrix is far less than a number of zero elements, or a ratio of a row weight to a code length and a ratio of a column weight to the code length in the matrix are both quite small values. An LDPC code may be expressed in a graph, and the graph is referred to as a Tanner graph. The Tanner graph is in one-to-one correspondence with the parity-check matrix, and includes two types of nodes: A first type of node represents a codeword symbol, and is referred to as a variable node. A second type of node represents a parity-check constraint relationship, and is referred to as a parity-check node. Each parity-check node represents one parity-check constraint relationship. For example, as shown in FIG. 2A and FIG. 2B, FIG. 2A is a diagram of an LDPC code parity-check matrix according to an embodiment of this application, and FIG. 2B is a Tanner graph of an LDPC code according to an embodiment of this application. In FIG. 2A and FIG. 2B, {Vi} represents a variable node set, and {Ci} represents a parity-check node set.

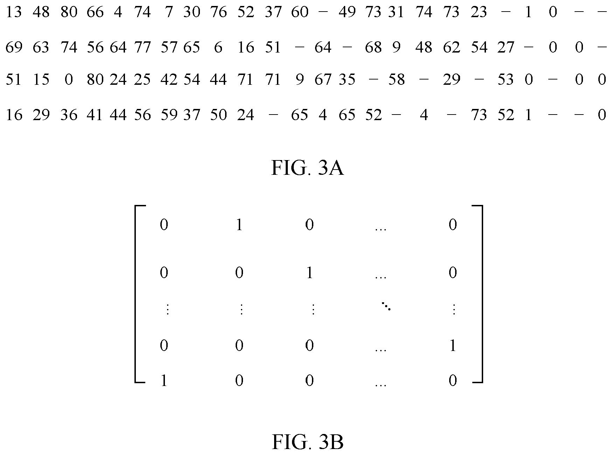

An LDPC code used in the 802.11ac/ax standard is a quasi cyclic LDPC (quasi cyclic LDPC, QC-LDPC) code. The QC-LDPC code is a structured LDPC code that is widely used. A parity-check matrix of the QC-LDPC code has a unique structure, and coding may be implemented by using a simple feedback shift register. Therefore, a problem of coding complexity of the LDPC code can be well resolved. FIG. 3A is a diagram of an LDPC code parity-check matrix with a coding rate of 1/2 and a code length of 648 according to an embodiment of this application. As shown in FIG. 3A, each element in the LDPC code parity-check matrix with a code length N of 648 and a coding rate R of 1/2 indicates a Z-order matrix (Z=N/24), where "0" indicates a Z×Z identity matrix, and "-" indicates a Z×Z all-zero matrix. For example, an element "22" in FIG. 3A indicates that a Z×Z identity matrix P is cyclically shifted rightward by 22 bits to obtain a cyclic shift matrix P22. Other non-zero elements in FIG. 3A are similar to the element "22", are not described in detail one by one again. Pi indicates a cyclic shift matrix, and i (0≤i≤Z-1) indicates a cyclic shift value. FIG. 3B is a diagram of a cyclic shift matrix P1 according to an embodiment of this application. As shown in FIG. 3B, the cyclic shift matrix P1 indicates that a Z×Z identity matrix P is cyclically shifted rightward by 1 bit.

### II. Procedure for determining an LDPC code length L_{LDPC}

In an existing WLAN standard (for example, 802.11n/ac), an orthogonal frequency division multiplexing (orthogonal frequency division multiplexing, OFDM) technology is used. An LDPC coding module needs to code data bits (which may also be understood as payload bits (payload bits)), and then place coded bits into an integer number of OFDM symbols. The coded bits also need to be able to be exactly placed into an integer number of LDPC codewords. Therefore, before transmission, a minimum number *N*_{SYM} of OFDM symbols required for current transmission needs to be calculated. Then, a total number of coded bits that can be stored in all the OFDM symbols is calculated based on NSYM and a current modulation and coding scheme: *N_{avbits}=N_{CBPS}*×*N*_{SYM}*,* where NCBPS indicates a number of coded bits that can be stored in each OFDM symbol. Then, an LDPC code length LLDPC used in current transmission and a number *N*_{CW} of codewords required in current transmission are determined based on the total number of coded bits *N_{avbits}.* However, for most lengths of to-be-coded data bits and modulation and coding schemes, there are insufficient data bits to fill information bit positions in an LDPC codeword. Therefore, a shortening (shorten) operation needs to be performed before parity bits (parity bits) are generated. The shortening (shorten) operation means filling a specific number of 0s into the information bit positions in the LDPC codeword before the parity bits are generated through LDPC coding. The 0s are deleted after the parity bits are generated through LDPC coding.

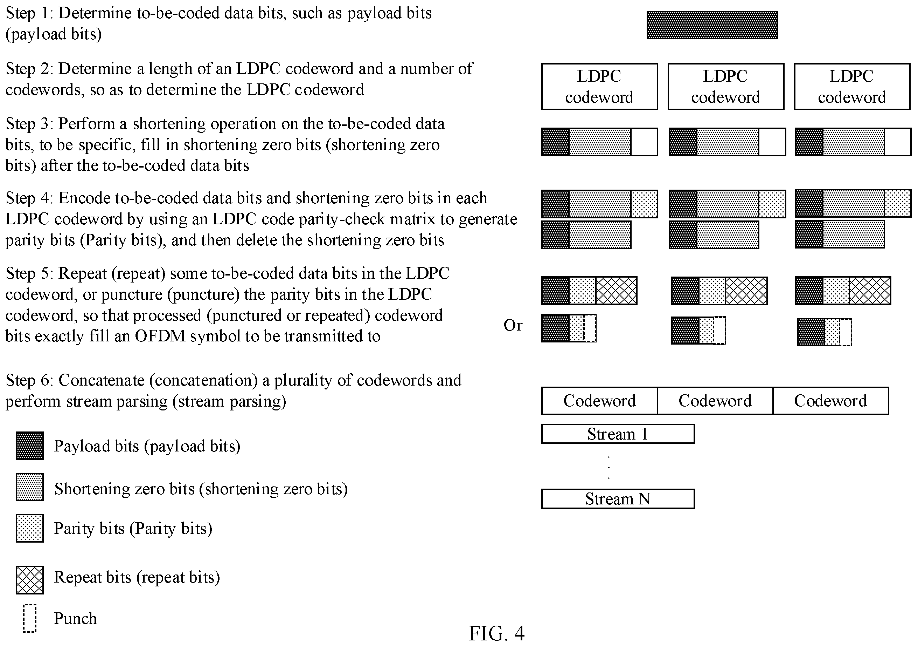

FIG. 4 is a diagram of an LDPC coding procedure in a WLAN according to an embodiment of this application. As shown in FIG. 4, the LDPC coding procedure in the WLAN includes at least step 1 (step 1) to step 6 (step 6).

Step 1: Determine to-be-coded data bits, such as payload bits (payload bits).

Step 2: Determine a length *L*_{LDPC} of an LDPC codeword and a number *N*_{CW} of codewords, so as to determine the LDPC codeword. For a specific determining method, refer to the following description.

Step 3: Perform a shortening operation on the to-be-coded data bits, to be specific, fill in shortening zero bits (shortening zero bits) after the to-be-coded data bits.

Step 4: Encode to-be-coded data bits and shortening zero bits in each LDPC codeword by using an LDPC code parity-check matrix to generate parity bits (Parity bits), and then delete the shortening zero bits.

Step 5: Repeat (repeat) some to-be-coded data bits in the LDPC codeword, or puncture (puncture) the parity bits in the LDPC codeword, so that processed (punctured or repeated) codeword bits exactly fill an OFDM symbol to be transmitted. In other words, a number of processed (punctured or repeated) codeword bits is equal to a number of bits that can be carried in the OFDM symbol.

Step 6: Concatenate (concatenation) a plurality of codewords and perform stream parsing (stream parsing).

In this application, an "LDPC code length" is a length of an LDPC codeword (LDPC codeword length), and the "LDPC code length", the "length of the LDPC codeword", and the "LDPC codeword length" may be used interchangeably.

Step 2, that is, a procedure of determining the length *L*_{LDPC} of the LDPC codeword and the number *N*_{CW} of codewords, includes the following step 21 to step 23.

Step 21: Calculate a minimum number *N*_{SYM} of OFDM symbols required for current transmission.

In a standard such as 802.11ac/ax, *N*_{SYM} satisfies ${N}_{SYM} = {m}_{STBC} \times \left⌈\frac{8 \times length + 16}{{m}_{STBC} \times {N}_{DBPS}}\right⌉$*,* where m_{STBC} represents a space-time coding mode of a data packet (the value is 1 when space-time coding is not used, and is 2 when space-time coding is used); *N*_{DBPS} represents a number of data bits carried in each OFDM symbol; and *length* represents a length (in units of bytes) of a data packet. Considering cyclic redundancy check (cyclic redundancy check, CRC) bits (for example, 16 bits) required for current data transmission, a data bit length *N_{pld}* required for current data transmission satisfies: *N_{pld}* = *length* × 8 + 16.

In the 802.11n standard, ${N}_{SYM} = {N}_{SYM , init} = {m}_{STBC} \times \left⌈\frac{8 \times APEP _ LENGTH + {N}_{service}}{{m}_{STBC} \times {N}_{DBPS}}\right⌉$, where *APEP_LENGTH* is a parameter *APEP_LENGTH* in TXVECTOR, and *N_{service}* is a number of bits in a service field. The data bit length *N_{pld}* in current data transmission satisfies: *N_{pld}* = *N_{SYM,init}* × *N_{DBPS}.*

Step 22: Determine, based on *N*_{SYM} and a modulation and coding scheme, a number *N*_{avbits} of coded bits that can be stored in the *N*_{SYM} OFDM symbols.

In a standard such as 802.11ac/ax, *N*_{avbits} *= N_{CBPS}×N_{SYM}*; and in the 802.11n standard, *N_{avbits}* = *N_{SYM,init}* × *N_{CBPS}*, where *N_{CBPS}* is a number of coded bits that can be stored in each OFDM symbol.

Step 23: Determine, based on N_{avbits}, an LDPC code length *L*_{LDPC} that needs to be used in current transmission and a number *N*_{CW} of codewords required for current transmission.

Generally, a larger LDPC code length indicates better error control performance of an LDPC code. Therefore, an LDPC code with a larger length should be selected as much as possible. However, after the LDPC code is coded, a puncturing operation needs to be performed. The puncturing operation may be understood as that several parity bits at the end of coded bits are not transmitted. The puncturing operation causes an increase in an actual coding rate, and consequently causes a specific performance loss. For LDPC codes with different code lengths, performance losses caused by the puncturing operation are different. Therefore, when a code length of an LDPC code is selected, an actual number of to-be-punctured bits further needs to be considered.

For example, *L*_{LDPC} and *N*_{CW} may be determined based on the following Table 1. Table 1 supports three code lengths: 648 bits, 1296 bits, and 1944 bits, and each code length supports three different coding rates: 1/2, 2/3, 3/4, and 5/6. R in Table 1 is a coding rate.

**Table 1**

| Range of *N*_{avbits} (bits) | Number of LDPC codewords (New) | LDPC codeword length *L*_{LDPC} (bits) |
|---|---|---|
| *N*_{avbits}≤648 | 1 | 1296, if *N*_{avbits} ≥ *N_{pld}+*912×(1-R) |
| | | 648, otherwise |
| 648<*N*_{avbits}≤1296 | 1 | 1944, if *N*_{avbits} ≥ *N_{pld}*+1363×(1-R) |
| | | 1296, otherwise |
| 1296<*N*_{avbits}≤1944 | 1 | 1944 |
| 1944<*N*_{avbits}≤2592 | 1 | 1944, if *N*_{avbits} ≥ *N_{pld}*+2916×(1-R) |
| | | 1296, otherwise |
| 2592<*N*_{avbits} | [*N_{pld}*/1944×R] | 1944 |

Each row in Table 1 may be considered as a criterion or a condition for determining an LDPC code length. For example, when *N*_{avbits}≤648, if *N*_{avbits}=*N_{pld}*+912×(1-R), and the LDPC code length is 1296 bits, a proportion of punctured parity bits to all parity bits is approximately 0.296 (not exceeding 30%). Therefore, when *N*_{avbits} ≥ *N_{pld}*+912×(1-R)*,* an LDPC code with a code length of 1296 bits may be selected, to obtain relatively good error control performance. On the contrary, when *N*_{avbits}<*N_{pld}*+912×(1-R), and the LDPC code length is 1296 bits, a proportion of punctured parity bits to all parity bits exceeds 0.296, and error control performance of the LDPC code is relatively low, so that an LDPC code with a code length of 648 bits should be selected.

Similarly, when 648<*N*_{avbits}≤1296, if *N*_{avbits}=*N_{pld}*+1363×(1-R), and the LDPC code length is 1944 bits, a proportion of punctured parity bits to all parity bits is approximately 0.237 (not exceeding 25%). Therefore, when *N*_{avbits} ≥ *N_{pld}*+1363×(1-R), an LDPC code with a code length of 1944 bits may be selected, to obtain relatively good error control performance. On the contrary, when *N*_{avbits}<*N_{pld}*+1363×(1-R), and the LDPC code length is 1944 bits, a proportion of punctured parity bits to all parity bits exceeds 0.273, and error control performance of the LDPC code is relatively low, so that an LDPC code with a code length of 1296 bits should be selected.

When 1944<*N*_{avbits}≤2592, if *N*_{avbits}=*N_{pld}*+2916×(1-R), and the LDPC code length is 1944 bits, a proportion of punctured parity bits to all parity bits is approximately 0.25 (25%). Therefore, when *N*_{avbits} ≥ *N_{pld}*+2916×(1-R), an LDPC code with a code length of 1944 bits may be selected, to obtain relatively good error control performance. On the contrary, when *N*_{avbits}<*N_{pld}*+2916×(1-R), and the LDPC code length is 1944 bits, a proportion of punctured parity bits to all parity bits exceeds 0.25, and error control performance of the LDPC code is relatively low, so that an LDPC code with a code length of 1296 bits should be selected.

A transmit end determines *L*_{LDPC} and *N*_{CW}; selects, based on *L*_{LDPC} and *N*_{CW}, a parity-check matrix to be used from a plurality of defined LDPC code parity-check matrices; and encodes to-be-sent information based on the selected parity-check matrix. For example, the 802.11ac/ax standard defines 12 LDPC code parity-check matrices.

A larger LDPC code length may be supported in the future. For example, an LDPC code with a code length of 1944×n bits may be supported in the future, where n is an integer greater than or equal to 2. In this case, the criterion for determining an LDPC code length shown in Table 1 is no longer appropriate. A higher coding rate may also be supported in the future, for example, R=7/8 or 8/9 is supported. Similarly, in this case, the criterion for determining an LDPC code length shown in Table 1 is no longer appropriate either.

In view of this, in embodiments of this application, an LDPC code length may be determined based on a number *N*_{avbits} of coded bits corresponding to to-be-coded information. For example, when *N*_{avbits} is within a first value range, the LDPC code length is a first code length.

In embodiments of this application, the LDPC code length may alternatively be determined based on the number *N*_{avbits} of coded bits corresponding to the to-be-coded information and a data bit length *N_{pld}* corresponding to the to-be-coded information. For example, when *N*_{avbits} is within a second value range and *N*_{avbits} ≥ *N_{pld}+*X×(1-R)*,* the LDPC code length is the first code length; or otherwise, the LDPC code length is a second code length. R is a coding rate, and X is a common multiple of denominators of all coding rates supported by a system. It may be understood that both the first code length and the second code length are less than or equal to a maximum LDPC code length supported by the system. Optionally, the second code length is less than the first code length, and a difference between the second code length and the first code length is minimum.

For a larger code length supported in the future, for example, a code length supported in the future is greater than 1944, the first code length/the second code length determined in the foregoing manner can make a proportion of parity bits punctured in a coding process to all parity bits less than a threshold, thereby improving error control performance of an LDPC code. The threshold is related to error control performance of an LDPC code. For example, when error control performance of the LDPC code is relatively good, the threshold is less than or equal to 30% or 25%.

The following describes, with reference to the accompanying drawings, the solutions provided in embodiments of this application.

To clearly describe the technical solutions of this application, this application is described by using a plurality of embodiments (for example, Embodiment 1 and Embodiment 2). For details, refer to the following. In this application, unless otherwise specified, for same or similar parts of embodiments or implementations, refer to each other. In embodiments of this application and the implementations/implementation methods in embodiments, unless otherwise specified or a logical conflict occurs, terms and/or descriptions are consistent and may be mutually referenced between different embodiments and between the implementations/implementation methods in embodiments. Technical features in the different embodiments and the implementations/implementation methods in embodiments may be combined to form a new embodiment, implementation, or implementation method based on an internal logical relationship thereof. The following implementations of this application are not intended to limit the protection scope of this application. It should be understood that a sequence of the following embodiments does not represent a degree of importance.

An example in which the method provided in embodiments of this application is applied to the network architecture shown in FIG. 1 is used in the following description. The network architecture and application scenarios described in embodiments of this application are intended to describe the technical solutions in embodiments of this application more clearly, and do not constitute a limitation on the technical solutions provided in embodiments of this application. A person of ordinary skill in the art may know: With evolution of the network architecture and emergence of new application scenarios, the technical solutions provided in embodiments of this application are also applicable to similar technical problems.

In embodiments of this application, "when", "in case ", and "if" all mean that an apparatus performs corresponding processing in an objective situation, are not intended to limit a time. In addition, the terms do not require the apparatus to necessarily have a determining action during implementation, and do not mean another limitation. Unless otherwise specified, "if" and "in case" are interchangeable, and "when" and "in a case of" are interchangeable. "When" and "if"/"in case" are interchangeable.

In embodiments of this application, the word "example" or "for example" is used to represent giving an example, an illustration, or a description. Any embodiment or design solution described as "example" or "for example" in this application should not be explained as being more preferred or having more advantages than another embodiment or design solution. To be precise, use of the words such as "example" or "for example" is intended to present a relative concept in a specific manner.

In embodiments of this application, unless otherwise specified, a number of nouns represents "a singular noun or a plural noun", that is, "one or more". "At least one" means one or more, and "a plurality of" means two or more. "And/or" describes an association relationship between associated objects and indicates that three relationships may exist. For example, "A and/or B" may indicate the following three cases: Only A exists, both A and B exist, and only B exists, where A and B may be singular or plural. The character "/" generally indicates an "or" relationship between the associated objects. For example, A/B indicates A or B. "At least one of the following items (pieces)" or a similar expression thereof means any combination of these items, including a single item (piece) or any combination of a plurality of items (pieces). For example, at least one of a, b, or c indicates a, b, c, a and b, a and c, b and c, or a, b, and c, where a, b, and c may be singular or plural.

Ordinal numbers such as "first" and "second" mentioned in embodiments of this application are used to distinguish between a plurality of objects, and are not used to limit sizes, content, an order, a time sequence, priorities, degrees of importance, or the like of the plurality of objects. For example, a first bit length and a second bit length are two different bit lengths, and do not indicate different priorities, degrees of importance, or the like of the two bit lengths.

The method provided in embodiments of this application is described below from a perspective of interaction between a first device and a second device by using an example in which the method is performed by the first device and the second device. The first device is a transmit device, and the second device is a receive device. Both the first device and the second device are devices that support a WLAN standard, or both the first device and the second device may be devices that support an ultra-wideband (ultrawideband, UWB) standard. A step performed by the first device may be implemented by the first device itself, or may be implemented by a component (for example, a module such as a processing chip or a processor) in the first device. For example, the first device is an AP, and the step performed by the first device may be performed by the AP itself, or may be performed by a Wi-Fi chip in the AP. Similarly, a step performed by the second device may be implemented by the second device itself, or may be implemented by a component (for example, a module such as a processing chip or a processor) in the second device.

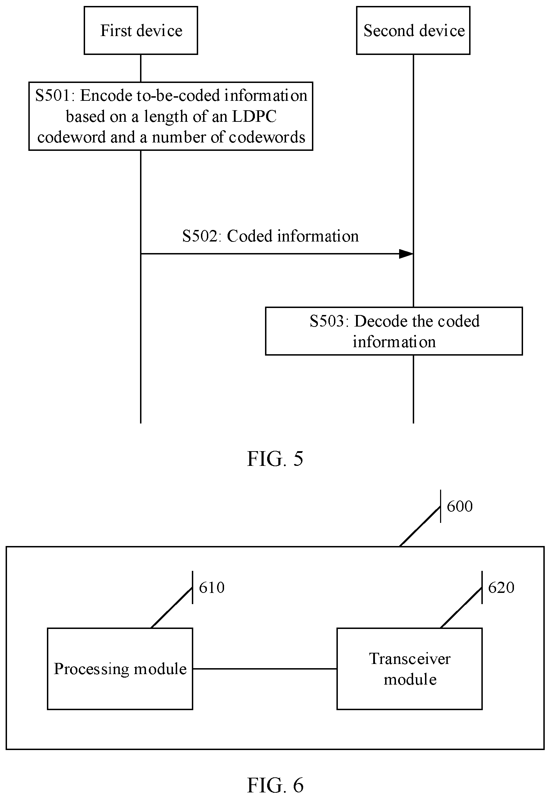

FIG. 5 is a schematic flowchart of a communication method according to an embodiment of this application. FIG. 5 describes the method from a perspective of interaction between a first device and a second device. The first device is, for example, an AP, and the second device is, for example, a STA. Alternatively, the first device is a STA, and the second device is an AP. Alternatively, the first device is a Wi-Fi chip, and the second device is a Wi-Fi chip or a device including a Wi-Fi chip. As shown in FIG. 5, a procedure of the method includes the following steps.

S501: The first device encodes to-be-coded information based on a length of an LDPC codeword and a number of codewords.

The to-be-coded information is information before channel coding. For example, the to-be-coded information includes to-be-sent data information and parity information required for sending the data information. For example, if a length of a to-be-sent data packet is *length* bytes, and a number of bits occupied by parity information required for sending the data information is 16, a data bit length of the to-be-coded information is *N_{pld}* = *length* × 8 + 16.

Before encoding the to-be-coded information based on the length of the LDPC codeword and the number of codewords, the first device needs to determine a number of coded bits corresponding to the to-be-coded information. For example, as described above, a minimum number *N*_{SYM} of OFDM symbols required for transmitting the to-be-coded information satisfies: ${N}_{SYM} = {m}_{STBC} \times \left⌈\frac{8 \times length + 16}{{m}_{STBC} \times {N}_{DBPS}}\right⌉$, or ${N}_{SYM} = {N}_{SYM , init} = {m}_{STBC} \times \left⌈\frac{8 \times APEP _ LENGTH + {N}_{service}}{{m}_{STBC} \times {N}_{DBPS}}\right⌉$. Assuming that a number of coded bits that can be stored in each OFDM symbol is *N_{CBPS},* the number *N*_{avbits} of coded bits corresponding to the to-be-coded information satisfies: *N*_{avbits} = *N_{CBPS}×N*_{SYM}, or *N*_{avbits} = *N_{SYM,init}* × *N_{CBPS}.*

Subsequently, there include the following two implementations (that is, Implementation 1 and Implementation 2 in the following) in which the first device determines the length of the LDPC codeword (that is, an LDPC code length) based on the number of coded bits. The following separately describes the two implementations. In the following description, different first code lengths may correspond to different first thresholds. For example, when *N*_{avbits} ≥ *N_{pld}+*X×(1-R)*,* the LDPC code length is the first code length, and the first threshold is less than or equal to 30%; or when *N*_{avbits} is within a second value range and *N*_{avbits} ≥ *N_{pld}+*X×(1-R)*,* the LDPC code length is the first code length, and the first threshold is less than or equal to 25%. For another example, when *N*_{avbits} is within the second value range and *N*_{avbits} ≥ *N_{pld}+*X×(1-R)*,* the LDPC code length is the first code length, and different X may correspond to different first thresholds.

Implementation 1: The LDPC code length is related to the number *N*_{avbits} of coded bits.

The first code length may also vary based on different maximum LDPC code lengths supported by a system, different quantities of LDPC codewords, and different first value ranges that *N*_{avbits} is within. The first value range may be one of a plurality of value ranges obtained through division based on a plurality of code lengths supported by the system. An end value of one or more of the plurality of value ranges may be one or more code lengths. For example, LDPC code lengths supported by the system include 648, 1296, 1944, and 3888, and the plurality of value ranges include (0, 648], (648, 1296], (1296, 1944], (1944, 3888], (3888, 3888+1944], (3888+1944, +∞], and the like. For another example, LDPC code lengths supported by the system include 648, 1296, 1944, 3888, and 7776, and the plurality of value ranges include (0, 648], (648, 1296], (1296, 1944], (1944, 3888], (3888, 7776], (7776, 7776+3888], (7776+3888, +∞], and the like.

Implementation 1 includes Case 11 and Case 12. In Case 11 and Case 12, an example in which a maximum LDPC code length supported by the system is greater than 1944 is used. For example, the maximum code length supported by the system is 1944×2 (that is, 3888), and the system supports four code lengths in total: 648, 1296, 1944, and 3888. For another example, the maximum code length supported by the system is 1944×4 (that is, 7776), and the system can support five code lengths in total: 648, 1296, 1944, 3888, and 7776.

In the following description, all LDPC code lengths supported by the system are sorted in ascending order, a third code length is a second-to-last LDPC code length after sorting, a fourth code length is a last LDPC code length after sorting, and a fifth code length is a third-to-last code length after sorting. For example, the maximum LDPC code length supported by the system is 3888, the third code length is 1944, the fourth code length is 3888, and the fifth code length is 1296. For another example, the maximum LDPC code length supported by the system is 7776, the third code length is 3888, the fourth code length is 7776, and the fifth code length is 1944.

Case 11: The number of LDPC codewords is 1.

In an implementation, the first value range and the first code length satisfy the following relationship: the first value range is (third code length, fourth code length], and the first code length is the maximum LDPC code length supported by the system.

It can be learned from Case 11 that: the first value range is (1944×(n-1), 1944×n], and the first code length is 1944×n. For example, n=2, that is, the maximum LDPC code length supported by the system is 1944×2. When *N*_{avbits} is within (1944×(2-1), 1944×2] (that is, (1944, 3888]), the first code length is 3888. For another example, n=4, that is, the maximum LDPC code length supported by the system is 1944×4. When *N*_{avbits} is within (1944×2, 1944×4] (that is, (3888, 7776]), the first code length is 7776.

The first code length determined in the implementation in Case 11 can make a proportion of punctured parity bits to all parity bits not exceed the first threshold. For example, when *N*_{avbits} is within (1944, 3888], and the first code length is 3888, a proportion of punctured parity bits to all parity bits does not exceed 30%; or when *N*_{avbits} is within (3888, 7776], and the first code length is 7776, a proportion of punctured parity bits to all parity bits does not exceed 25%. Therefore, relatively good error control performance can be obtained by determining an LDPC code length in the foregoing two implementations.

Case 12: The number of LDPC codewords is *N_{pld}*/(1944×n×R).

In an implementation, the first value range and the first code length satisfy the following relationship: the first value range is (third code length+fourth code length, +∞], and the first code length is the third code length.

It can be learned from the implementation that: the first value range is (1944×n+1944, +∞], and the first code length is 1944×n; or the first value range is (1944×n+3888, +∞], and the first code length is 1944×n. For example, n=2, the first value range includes (1944×n+1944, +∞], and the first code length is 1944×n. That is, n=2, *N*_{avbits} is within (5832, +∞], and the first code length is 3888. For another example, n=4, the first value range includes (1944×n+3888, +∞], and the first code length is 1944×n. That is, n=4, *N*_{avbits} is within (11664, +∞], and the first code length is 3888.

In an implementation, the first value range and the first code length satisfy the following relationship: the first value range is (fourth code length-third code length, +∞], and the first code length is the fourth code length.

It can be learned from the implementation that: the first value range is (1944×n-1944, +∞], and the first code length is 1944×n. For example, n=2, the first value range includes (1944×n-1944, +∞], and the first code length is 1944×n. That is, n=2, *N*_{avbits} is within (1944, +∞], and the first code length is 3888.

In an implementation, the first value range and the first code length satisfy the following relationship: the first value range is (fourth code length-fifth code length, +∞], and the first code length is the fourth code length.

It can be learned from the implementation that: the first value range is (1944×n-1296, +∞], and the first code length is 1944×n. For example, n=2, the first value range includes (1944×n-1296, +∞], and the first code length is 1944×n. That is, n=2, *N*_{avbits} is within (2592, +∞], and the first code length is 3888.

The first code length determined in any one of the three implementations in Case 12 can make a proportion of punctured parity bits to all parity bits not exceed the first threshold, so as to obtain relatively good error control performance.

It should be noted that the manners of determining an LDPC code length shown in Case 11 and Case 12 are applicable to a case in which coding rates supported by the system are 1/2, 2/3, 3/4, and 5/6, and may also be applicable to a case in which a coding rate is newly added. For example, when all coding rates supported by the system include another coding rate (for example, 7/8 and/or 8/9) in addition to 1/2, 2/3, 3/4, and 5/6, the LDPC code length may be determined in the manners shown Case 11 and Case 12.

Implementation 2: The LDPC code length is related to *N*_{avbits} and *N_{pld}.*

In Implementation 2, when *N*_{avbits} is within the second value range and *N*_{avbits} ≥ *N_{pld}+*X×(1-R)*,* the LDPC code length is the first code length; or otherwise, the LDPC code length is a second code length. The second value range is similar to the first value range, and is also one of a plurality of value ranges obtained through division based on a plurality of code lengths supported by a system. For details, refer to related content in Implementation 1. Details are not described herein again.

R is a coding rate. If the coding rate is expressed in a fractional form, X is a common multiple of denominators of all coding rates supported by the system. For example, if the coding rates supported by the system include 1/2, 2/3, 3/4, and 5/6, X is a common multiple of 12. For another example, if the coding rates supported by the system include 1/2, 2/3, 3/4, 5/6, and 7/8, X is a common multiple of 24; or if the coding rates supported by the system include 1/2, 2/3, 3/4, 5/6, 7/8, and 8/9, X is a common multiple of 72. It should be noted that if the coding rate is expressed in a fractional form, the coding rate may be converted into a fractional form. For example, X satisfies X=Y+Zt, and Z is a least common multiple of the denominators of all the coding rates supported by the system. For example, if all the coding rates supported by the system include 1/2, 2/3, 3/4, 5/6, and 7/8, Z is 24; or if the coding rates supported by the system include 1/2, 2/3, 3/4, 5/6, 7/8, and 8/9, Z may be 72. Herein, t is an integer greater than or equal to -2 and less than or equal to 2, and Y makes a proportion of punctured parity bits in a coding process to all parity bits less than the first threshold.

Implementation 2 includes Case 21, Case 22, Case 23, and Case 24. In Case 21 and Case 22, the following example is used: All the coding rates supported by the system are 1/2, 2/3, 3/4, and 5/6 (that is, Z=12), and a maximum LDPC code length supported by the system includes 1944×n, where n is an integer greater than or equal to 2. In Case 23 and Case 24, the following example is used: All the coding rates supported by the system include another coding rate in addition to 1/2, 2/3, 3/4, and 5/6, and a maximum LDPC code length supported by the system includes 1944×n, where n is an integer greater than or equal to 2. The another coding rate includes, for example, 7/8 and/or 8/9, that is, Z=12i, where i is an integer greater than or equal to 2. For example, all the coding rates supported by the system include 1/2, 2/3, 3/4, 5/6, and 7/8, and Z=23, that is, i=2. For another example, all the coding rates supported by the system include 1/2, 2/3, 3/4, 5/6, 7/8, and 8/9, and Z=36, that is, i=3.

Case 21: The number of LDPC codewords is 1.

In an implementation, the second value range and the first code length may satisfy the following relationship: the second value range is (fifth code length, third code length], and when *N*_{avbits} ≥ *N_{pld}+*X×(1-R)*,* the first code length is the maximum LDPC code length supported by the system. For a value of X, refer to the foregoing related content. Details are not described herein again.

It can be learned from the implementation that: when n=2, the second value range is (1944×(n+1)-648, 1944×(n-1)], and X=2916+12×t1, if *N*_{avbits} ≥ *N_{pld}+*X×(1-R)*,* the first code length is 1944×n; or otherwise, the second code length is 1944. For example, n=2, the second value range is (1296, 1944], and X=2916+12×t1. When *N*_{avbits} ≥ *N_{pld}+*X×(1-R)*,* the first code length is 1944; or otherwise, the second code length is 1944. For another example, the second value range is (1944, 1944×2], X=5832+12t2, and the first code length is 1944×n, where t1 may be within [-2, 2], t2 may be within [-2, 2], and t2 and t1 may be the same or different.

It can be learned from the implementation that: when n=4, the second value range is (1944×(n+1)-648, 1944×(n-1)], and X=X=5832+12×t2, if *N*_{avbits} ≥ *N_{pld}+*X×(1-R)*,* the first code length is 1944×n; or otherwise, the second code length is 3888. For example, n=4, the second value range is (1296, 1944], and X=5832+12×t2. When *N*_{avbits} ≥ *N_{pld}+*X×(1-R)*,* the first code length is 1944; or otherwise, the second code length is 1944. For another example, the second value range is (1944, 1944×2], X=5832+12×t2, and the first code length is 1944×n, where t2 may be within [-2, 2], and t2 and t1 may be the same or different.

The first code length determined in the implementation in Case 21 can make a proportion of punctured parity bits to all parity bits not exceed the first threshold (for example, 25%), so as to obtain relatively good error control performance.

Case 22: The number of LDPC codewords is 2 or 3.

In Case 22, the second value range and the first code length may satisfy the following relationship: the second value range is (fourth code length, fourth code length+third code length], and when *N*_{avbits} ≥ *N_{pld}+*X×(1-R)*,* the first code length is the maximum LDPC code length supported by the system. For a value of X, refer to the foregoing related content. Details are not described herein again.

It can be learned from the implementation that: when n=2, the second value range is (1944×n, 1944×(n+1)], and X=1944×(n+1)+12×t1, if *N*_{avbits} ≥ *N_{pld}+*X×(1-R)*,* the first code length is 1944×n; or otherwise, the second code length is 1944. For example, n=2, the second value range is (3888, 5832], and X=5832+12×t2. When *N*_{avbits} ≥ *N_{pld}+*X×(1-R)*,* the first code length is 1944; or otherwise, the second code length is 1944, where t1 may be within [-2, 2]. It may be understood that when 3888<*N*_{avbits}≤5832, the number of LDPC codewords is 2, *N*_{avbits} ≥ *N_{pld}+*X×(1-R)*,* and X=2916+12×t1, the first code length is 3888. When 3888<*N*_{avbits}≤5832, the number of LDPC codewords is 3, *N*_{avbits}<*N_{pld}*+X×(1-R), and X=5832+12×t2, the first code length is 1944.

It can be learned from the implementation that: when n=4, the second value range is (1944×n, 1944×(n+2)] or (1944×n, 1944×n+1944×n/2], and X=1944×(n+2)+12×t2, if *N*_{avbits} ≥ *N_{pld}+*X×(1-R)*,* the first code length is 1944×n; or otherwise, the second code length is 1944×n/2. For example, n=4, the second value range is (7776, 11164], and X=11164+12×t3. When *N*_{avbits} ≥ *N_{pld}+*X×(1-R)*,* the first code length is 7776; or otherwise, the second code length is 3888, where t3 may be within [-2, 2], and t3 and t1 may be the same or different. It may be understood that when 7776<*N*_{avbits}≤11663, the number of LDPC codewords is 2, *N*_{avbits} ≥ *N_{pld}+*X×(1-R)*,* and X=11164+12×t3, the first code length is 7776. When 7776<*N*_{avbits}≤11663, the number of LDPC codewords is 3, *N*_{avbits}<*N_{pld}*+X×(1-R), and X=11164+12×t3, the first code length is 3888.

The first code length determined in the implementation in Case 22 can make a proportion of punctured parity bits to all parity bits not exceed the first threshold (for example 25%), so as to obtain relatively good error control performance.

Case 23: The number of LDPC codewords is 1.

In an implementation, the second value range and the first code length may satisfy the following relationship: the second value range is (fifth code length, third code length], and if *N*_{avbits} ≥ *N_{pld}+*X×(1-R)*,* and X=Y+12i×t, the first code length is the maximum LDPC code length supported by the system, where i=2 or 3, and Y includes 2928; i=3, and Y includes 2916; or i=3, and Y includes 2942.

It can be learned from the implementation that: the second value range includes (1944×(n+1)-648, 1944×(n-1)], X=Y+12i×t, and the first code length is 1944×n.

For example, all the coding rates supported by the system include 1/2, 2/3, 3/4, 5/6, and 7/8, and X is a common multiple of 23. When n=2, X=912=38×23, *N*_{avbits}≤648, and *N*_{avbits} ≥ *N_{pld}+*X×(1-R)*,* the first code length is 1296. When n=2, X=1363=61×23, 648<*N*_{avbits}≤1296, and *N*_{avbits} ≥ *N_{pld}+*X×(1-R)*,* the first code length is 1944. If i=2 or 3, and Y=2928, when n=2, X=2928+23×t1, 1296<*N*_{avbits}≤1944, and *N*_{avbits} ≥ *N_{pld}+*X×(1-R)*,* the first code length is 3888.

For another example, all the coding rates supported by the system include 1/2, 2/3, 3/4, 5/6, and 8/9, and X is a common multiple of 36. When n=2, X=936=26×36, *N*_{avbits}≤648, and *N*_{avbits} ≥ *N_{pld}* +X×(1-R), the first code length is 1296. When n=2, X=1376=61×36, 648<*N*_{avbits}≤1296, and *N*_{avbits} ≥ *N_{pld}+*X×(1-R)*,* the first code length is 1944. If i=2 or 3, and Y=2916, when n=2, X=2916+36×t1, 1296<*N*_{avbits}≤1944, and *N*_{avbits} ≥ *N_{pld}+*X×(1-R)*,* the first code length is 3888.

For another example, all the coding rates supported by the system include 1/2, 2/3, 3/4, 5/6, 7/8, and 8/9, and X is a common multiple of 72. When n=2, X=936=13×72, *N*_{avbits}≤648, and *N*_{avbits} ≥ *N_{pld}* +X×(1-R), the first code length is 1296. When n=2, X=1512=21×72, 648< *N*_{avbits} ≤1296, and *N*_{avbits} ≥ *N_{pld}* +X×(1-R), the first code length is 1944. If i=3, and Y=2952, when n=2, X=2952+72×t1, 1296<*N*_{avbits}≤1944, and *N*_{avbits} ≥ *N_{pld}+*X×(1-R)*,* the first code length is 3888.

The first code length determined in the implementation in Case 23 can make a proportion of punctured parity bits to all parity bits not exceed the first threshold (for example 25%), so as to obtain relatively good error control performance.

Case 24: The number of LDPC codewords is 2 or 3.

In an implementation, the second value range and the first code length may satisfy the following relationship: the second value range is (fourth code length, fourth code length+third code length], and if *N*_{avbits} ≥ *N_{pld}+*X×(1-R)*,* and X=Y+12i×t, the first code length is a fourth code length.

It can be learned from the implementation that: the second value range is (1944×n, 1944×(n+1)], and if *N*_{avbits} ≥ *N_{pld}+*X×(1-R) and X=Y+12i×t, the first code length is 1944×n.

For example, all the coding rates supported by the system include 1/2, 2/3, 3/4, 5/6, and 7/8, and X is a common multiple of 24. When n=2, and X=5832=243×24, if 3888<*N*_{avbits} ≤5832, and *N*_{avbits} ≥ *N_{pld}+*X×(1-R)*,* the first code length is 3888; or otherwise, the second code length is 1944.

For another example, all the coding rates supported by the system include 1/2, 2/3, 3/4, 5/6, and 8/9, and X is a common multiple of 36. When n=2, and X=5832=162×36, if 3888<*N*_{avbits} ≤5832, and *N*_{avbits} ≥ *N_{pld}+*X×(1-R)*,* the first code length is 3888; or otherwise, the second code length is 1944.

For another example, all the coding rates supported by the system include 1/2, 2/3, 3/4, 5/6, 7/8, and 8/9, and X is a common multiple of 72. When n=2, and X=5832=81×72, if 3888<*N*_{avbits} ≤5832, and *N*_{avbits} ≥ *N_{pld}+*X×(1-R)*,* the first code length is 3888; or otherwise, the second code length is 1944.

In another implementation, the second value range and the first code length may satisfy the following relationship: the second value range is (third code length, fourth code length-third code length], and if *N*_{avbits} ≥ *N_{pld}+*X×(1-R)*,* and X=Y+12i×t, the first code length is the third code length.

It can be learned from the implementation that: the second value range is (1944×n, 1944×(n+1)-648], and if *N*_{avbits} ≥ *N_{pld}+*X×(1-R)*,* and X=Y+12i×t, the first code length is 1944×(n-1).

For example, all the coding rates supported by the system include 1/2, 2/3, 3/4, 5/6, and 7/8, and X is a common multiple of 24. When n=2, and X=2928=122×24, if 1944<*N*_{avbits} ≤2592, and *N*_{avbits} ≥ *N_{pld}+*X×(1-R)*,* the first code length is 1944; or otherwise, the second code length is 1296.

For another example, all the coding rates supported by the system include 1/2, 2/3, 3/4, 5/6, and 8/9, and X is a common multiple of 36. When n=2, and X=2916=81×36, if 1944<*N*_{avbits} ≤2592, and *N*_{avbits} ≥ *N_{pld}+*X×(1-R)*,* the first code length is 1944; or otherwise, the second code length is 1296.

For another example, all the coding rates supported by the system include 1/2, 2/3, 3/4, 5/6, 7/8, and 8/9, and X is a common multiple of 72. When n=2, and X=2952=41×72, if 1944<*N*_{avbits}≤2592, and *N*_{avbits}≥*N_{pld}+*X×(1-R)*,* the first code length is 1944; or otherwise, the second code length is 1296.

The first code length determined in any implementation in Case 24 can make a proportion of punctured parity bits to all parity bits not exceed the first threshold (for example, 25% or 30%), so as to obtain relatively good error control performance.

It should be noted that a manner of determining an LDPC code length includes Implementation 1 and/or Implementation 2. Alternatively, a manner of determining an LDPC code length includes one or more manners in one or more of Case 11 to Case 24. Alternatively, the LDPC code length satisfies one or more conditions in one or more of Case 11 to Case 24.

For example, the following Table 2 to Table 9 respectively show manners of determining an LDPC code length. The first device may determine an LDPC code length based on at least one row in one or more of Table 2 to Table 9. Any of Table 2 to Table 9 may be understood as an extension of Table 1, and shows a manner of determining an LDPC code length in a scenario with a larger LDPC code length and/or more coding rates. Bold rows or bold text in any of Table 2 to Table 9 indicates differences from Table 1. A meaning represented by one or more of X1 to X5 in Table 2 to Table 9 is the same as that of X. It may be understood that Table 2 to Table 9 are merely examples. In actual application, an LDPC code length is determined based on some or all rows in one or more of Table 2 to Table 9. Table 2 to Table 9 may be defined in a standard, or may be preset, or may be determined by both communication parties through negotiation, or the like.

**Table 2**

| Range of *N*_{avbits} (bits) | Number of LDPC codewords (*N*_{CW}) | LDPC codeword length *L*_{LDPC} (bits) |
|---|---|---|
| *N*_{avbits}≤648 | 1 | 1296, if *N*_{avbits} ≥ *N_{pld}*+912×(1*-*R) |
| | | 648, otherwise |
| 648<*N*_{avbits}≤1296 | 1 | 1944, if *N*_{avbits} ≥ *N_{pld}+*1363×(1-R) |
| | | 1296, otherwise |
| 1296<*N*_{avbits}≤1944 | 1 | 3888, if *N*_{avbits} ≥ *N_{pld}*+X1×(1-R) |
| | | 1944, otherwise |
| 1296<*N*_{avbits}≤3888 | 1 | 3888 |
| 3888<*N*_{avbits}≤5832 | 2 (3888) or 3 (1944) | 3888, if *N*_{avbits} ≥ *N_{pld}+*X2×(1-R) |
| | | 1944, otherwise |
| 5832<*N*_{avbits} | [*N_{pld}*/3888×R] | 3888 |

Table 2 may be applied to a scenario in which the maximum LDPC code length supported by the system is 1944×n, where n is an integer greater than or equal to 2, and all the coding rates supported by the system are 1/2, 2/3, 3/4, and 5/6. Compared with Table 1, manners of determining an LPDC code in a third row to a sixth row are newly added to Table 2. It can be learned from the foregoing that X1 and X2 are common multiples of 12. To ensure that a proportion of punctured parity bits to all parity bits does not exceed the first threshold, to ensure error control performance of an LDPC code, appropriate X1 and X2 may be selected. For example, it is agreed that a proportion of punctured parity bits to all parity bits is approximately 0.25. Optionally, X1=2916=12×233, and X2=5832=12×386. For another example, a proportion of punctured parity bits to all parity bits is less than 0.25. Optionally, X1=2916+12×t1, and X2=5832+12×t2, where both t1 and t2 are integers greater than or equal to -2 and less than or equal to 2, and t1 and t2 may be the same or different.

When 3888<*N*_{avbits}≤5832, if *N*_{avbits} ≥ *N_{pld}* + X2 × (1 - R), an LDPC code with a code length of 3888 is selected, and in this case, the number of LDPC codewords is 2. If *N*_{avbits} < *N_{pld}* + X2 × (1 - R), an LDPC code with a code length of 1944 is selected, and in this case, the number of LDPC codewords is 3.

**Table 3**

| Range of *N*_{avbits} (bits) | Number of LDPC codewords (*N*_{CW}) | LDPC codeword length *L*_{LDPC} (bits) |
|---|---|---|
| *N*_{avbits}≤648 | 1 | 1296, if *N*_{avbits} ≥ |
| | | *N_{pld}*+912×(1*-*R) |
| | | 648, otherwise |
| 648<*N*_{avbits}≤1296 | 1 | 1944, if *N*_{avbits} ≥ *N_{pld}*+1363×(1-R) |
| | | 1296, otherwise |
| 1296<*N*_{avbits}≤1944 | 1 | 3888, if *N*_{avbits} ≥ *N_{pld}+*X1×(1-R) |
| | | 1944, otherwise |
| 1944<*N*_{avbits} | [*N_{pld}*/3888×R] | 3888 |

Table 3 may be applied to a scenario in which the maximum LDPC code length supported by the system is 1944×n, where n is an integer greater than or equal to 2, and all the coding rates supported by the system are 1/2, 2/3, 3/4, and 5/6. Compared with Table 1, manners of determining an LPDC code in a third row and a fourth row are newly added to Table 3. It can be learned from the foregoing that X1 is a common multiple of 12. To ensure that a proportion of punctured parity bits to all parity bits does not exceed the first threshold, to ensure error control performance of an LDPC code, appropriate X1 may be selected. For example, it is agreed that a proportion of punctured parity bits to all parity bits is approximately 0.25. Optionally, X1=2916=12×233. For another example, a proportion of punctured parity bits to all parity bits is less than 0.25. Optionally, X1=2916+12×t1.

When 1944<*N*_{avbits}, an LDPC code with a code length of 3888 is selected, and in this case, the number of LDPC codewords is [*N_{pld}*/3888×R].

**Table 4**

| Range of *N*_{avbits} (bits) | Number of LDPC codewords (*N*_{CW}) | LDPC codeword length *L*_{LDPC} (bits) |
|---|---|---|
| *N*_{avbits}≤648 | 1 | 1296, if *N*_{avbits} ≥ *N_{pld}*+912×(1*-*R) |
| | | 648, otherwise |
| 648<*N*_{avbits}≤1296 | 1 | 1944, if *N*_{avbits} ≥ *N_{pld}*+1363×(1-R) |
| | | 1296, otherwise |
| 1296<*N*_{avbits}≤1944 | 1 | 1944 |
| 1944<*N*_{avbits}≤2592 | 2 | 1944, if *N*_{avbits} ≥ *N_{pld}+*2916×(1-R) |
| | | 1296, otherwise |
| 2592<*N*_{avbits} | [*N_{pld}*/3888×R] | 3888 |

Table 4 may be applied to a scenario in which the maximum LDPC code length supported by the system is 1944×n, where n is an integer greater than or equal to 2, and all the coding rates supported by the system are 1/2, 2/3, 3/4, and 5/6. Compared with Table 1, a manner of determining an LPDC code in a fifth row is newly added to Table 4.

When 2592<*N*_{avbits}, an LDPC code with a code length of 3888 is selected, and in this case, the number of LDPC codewords is [*N_{pld}*/3888×R].

**Table 5**

| Range of *N*_{avbits} (bits) | Number of LDPC codewords (*N*_{CW}) | LDPC codeword length *L*_{LDPC} (bits) |
|---|---|---|
| *N*_{avbits}≤648 | 1 | 1296, if *N*_{avbits} ≥ *N_{pld}+*X3×(1-R) |
| | | 648, otherwise |
| 648<*N*_{avbits}≤1296 | 1 | 1944, if *N*_{avbits} ≥ *N_{pld}+*X4×(1-R) |
| | | 1296, otherwise |
| 1296<*N*_{avbits}≤1944 | 1 | 3888, if *N*_{avbits} ≥ *N_{pld}*+X1×(1-R) |
| | | 1944, otherwise |
| 1296<*N*_{avbits}≤3888 | 1 | 3888 |
| 3888<*N*_{avbits}≤5832 | 2 (3888) or 3 (1944) | 3888, if *N*_{avbits} ≥ *N_{pld}+*X2×(1-R) |
| | | 1944, otherwise |
| 5832<*N*_{avbits} | [*N_{pld}*/3888×R] | 3888 |

Table 5 may be applied to a scenario in which the maximum LDPC code length supported by the system is 1944×n, where n is an integer greater than or equal to 2, and all the coding rates supported by the system include another coding rate in addition to 1/2, 2/3, 3/4, and 5/6. The another coding rate includes, for example, 7/8 and/or 8/9. Compared with Table 1, manners of determining an LDPC code length in a third row to a sixth row are newly added to Table 5, and manners of determining an LDPC code length in a first row and a second row are changed.

It can be learned from the foregoing that X1 to X3 are all common multiples of the denominators of all the coding rates. To ensure that a proportion of punctured parity bits to all parity bits does not exceed the first threshold, to ensure error control performance of an LDPC code, appropriate X1 to X3 may be selected. For example, it is agreed that a proportion of punctured parity bits to all parity bits is approximately 0.25. It is assumed that a newly added coding rate is R=7/8. Optionally, X3=912=38×23, X4=1363=61×23, X1=2928=122×23, and X2=5832=233×23. For another example, a proportion of punctured parity bits to all parity bits is less than 0.25. Optionally, X1=2928+23×t1, X2=5832+23×t2, X3=912+23×t3, and X4=1363+23×t3.

Compared with Table 1, it is assumed that a newly added coding rate is R=8/9. Optionally, X3=936=26×36, X4=1376=31×36, X1=2916=81×36, and X2=5832=162×36. For another example, a proportion of punctured parity bits to all parity bits is less than 0.25. Optionally, X1=2916+36×t1, X2=5832+36×t2, X3=936+36×t3, and X4=1376+36×t3.

Compared with Table 1, it is assumed that coding rates R=7/8 and R=8/9 are newly added. Optionally, X3=936=13×72, X4=1512=21×72, X1=2952=31×72, and X2=5832=81×72. For another example, a proportion of punctured parity bits to all parity bits is less than 0.25. Optionally, X1=2952+72×t1, X2=5832+72×t2, X3=936+72×t3, and X4=1521+72×t3.

**Table 6**

| Range of *N*_{avbits} (bits) | Number of LDPC codewords (*N*_{CW}) | LDPC codeword length *L*_{LDPC} (bits) |
|---|---|---|
| *N*_{avbits}≤648 | 1 | 1296, if *N*_{avbits} ≥ *N_{pld}+*X3×(1-R) |
| | | 648, otherwise |
| 648<*N*_{avbits}≤1296 | 1 | 1944, if *N*_{avbits} ≥ *N_{pld}+*X4×(1-R) |
| | | 1296, otherwise |
| 1296<*N*_{avbits}≤1944 | 1 | 3888, if *N*_{avbits} ≥ *N_{pld}*+X1×(1-R) |
| | | 1944, otherwise |
| 1944<*N*_{avbits} | [*N_{pld}*/3888×R] | 3888 |

Table 6 may be applied to a scenario in which the maximum LDPC code length supported by the system is 1944×n, where n is an integer greater than or equal to 2, and all the coding rates supported by the system include another coding rate in addition to 1/2, 2/3, 3/4, and 5/6. The another coding rate includes, for example, 7/8 and/or 8/9. Compared with Table 1, manners of determining an LDPC code length in a third row and a fourth row are newly added to Table 6, and manners of determining an LDPC code length in a first row and a second row are changed.

It can be learned from the foregoing that X1, X3, and X4 are all common multiples of the denominators of all the coding rates. For details, refer to values of X1, X3, and X4 in Table 5. Details are not described herein again.

**Table 7**

| Range of *N*_{avbits} (bits) | Number of LDPC codewords (*N*_{CW}) | LDPC codeword length *L*_{LDPC} (bits) |
|---|---|---|
| *N*_{avbits}≤648 | 1 | 1296, if *N*_{avbits} ≥ *N_{pld}+*X3×(1-R) |
| | | 648, otherwise |
| 648<*N*_{avbits}≤1296 | 1 | 1944, if *N*_{avbits} ≥ *N_{pld}+*X4×(1-R) |
| | | 1296, otherwise |
| 1296<*N*_{avbits}≤1944 | 1 | 1944 |
| 1944<*N*_{avbits}≤2592 | 2 | 1944, if *N*_{avbits} ≥ *N_{pld}+*X1×(1-R) |
| | | 1296, otherwise |
| 2592<*N*_{avbits} | [*N_{pld}*/3888×R] | 3888 |

Table 6 may be applied to a scenario in which the maximum LDPC code length supported by the system is 1944×n, where n is an integer greater than or equal to 2, and all the coding rates supported by the system include another coding rate in addition to 1/2, 2/3, 3/4, and 5/6. The another coding rate includes, for example, 7/8 and/or 8/9. Compared with Table 1, manners of determining an LDPC code length in a fourth row and a fifth row are newly added to Table 7, and manners of determining an LDPC code length in a first row and a second row are changed.

It can be learned from the foregoing that X1, X3, and X4 are all common multiples of the denominators of all the coding rates. For details, refer to values of X1, X3, and X4 in Table 5. Details are not described herein again.

**Table 8**

| Range of *N*_{avbits} (bits) | Number of LDPC codewords (*N*_{CW}) | LDPC codeword length *L*_{LDPC} (bits) |
|---|---|---|
| *N*_{avbits}≤648 | 1 | 1296, if *N*_{avbits} ≥ *N_{pld}+*X3×(1-R) |
| | | 648, otherwise |
| 648<*N*_{avbits}≤1296 | 1 | 1944, if *N*_{avbits} ≥ *N_{pld}+*X4×(1-R) |
| | | 1296, otherwise |
| 1296<*N*_{avbits}≤1944 | 1 | 1944 |
| 1944<*N*_{avbits}≤2592 | 2 | 1944, if *N*_{avbits} ≥ *N_{pld}+*X1×(1-R) |
| | | 1296, otherwise |
| 2592<*N*_{avbits} | [*N_{pld}*/1944×R] | 1944 |

Table 8 may be applied to a scenario in which the maximum LDPC code length supported by the system is 1944, and all the coding rates supported by the system include another coding rate in addition to 1/2, 2/3, 3/4, and 5/6. The another coding rate includes, for example, 7/8 and/or 8/9. Compared with Table 1, a manner of determining an LDPC code length in a fourth row is newly added to Table 8, and manners of determining an LDPC code length in a first row and a second row are changed.

It can be learned from the foregoing that X1, X3, and X4 are all common multiples of the denominators of all the coding rates. For details, refer to values of X1, X3, and X4 in Table 5. Details are not described herein again.

**Table 9**

| Range of *N*_{avbits} (bits) | Number of LDPC codewords (*N*_{CW}) | LDPC codeword length *L*_{LDPC} (bits) |
|---|---|---|
| *N*_{avbits}≤648 | 1 | 1296, if *N*_{avbits} ≥ *N_{pld}*+912×(1*-*R) |
| | | 648, otherwise |
| 648<*N*_{avbits}≤1296 | 1 | 1944, if *N*_{avbits} ≥ *N_{pld}*+1363×(1-R) |
| | | 1296, otherwise |
| 1296<*N*_{avbits}≤1944 | 1 | 3888, if *N*_{avbits} ≥ *N_{pld}+*X1×(1-R) |
| | | 1944, otherwise |
| 1944<*N*_{avbits}≤3888 | 1 | 7776, if *N*_{avbits} ≥ *N_{pld}+*X2×(1*-*R) |
| | | 3888, otherwise |
| 3888<*N*_{avbits}≤7776 | 1 | 7776 |
| 7776<*N*_{avbits}≤11163 | 2 (7776) or 3 (3888) | 7776, if *N*_{avbits} ≥ *N_{pld}+*X5×(1-R) |
| | | 3888, otherwise |
| 11163<*N*_{avbits} | [*N_{pld}*/7776×R] | 7776 |

Table 9 may be applied to a scenario in which the maximum LDPC code length supported by the system is 1944×n, where n is an integer greater than or equal to 2, and all the coding rates supported by the system include 1/2, 2/3, 3/4, and 5/6. Compared with Table 1, manners of determining an LDPC code length in a third row to a seventh row are newly added to Table 9.

It can be learned from the foregoing that X1, X3, and X3 are all common multiples of the denominators of all the coding rates. To ensure that a proportion of punctured parity bits to all parity bits does not exceed the first threshold, to ensure error control performance of an LDPC code, appropriate X1, X2, and X5 may be selected. For example, it is agreed that a proportion of punctured parity bits to all parity bits is approximately 0.25. Optionally, X1=2916=12×233, X2=5832=12×386, and X5=11663=12×972. For another example, a proportion of punctured parity bits to all parity bits is less than 0.25. Optionally, X1=2916+12×t1, X2=5832+12×t2, and X5=11663+12×t3, where both t1 and t2 are integers greater than or equal to -2 and less than or equal to 2, and t1, t2, and t3 may be the same or different.

When 7776<*N*_{avbits}≤11663, if *N*_{avbits} ≥ *N_{pld}* + X5 × (1 - R), an LDPC code with a code length of 7776 is selected, and in this case, the number of LDPC codewords is 2. If *N*_{avbits} < *N_{pld}* + X5 × (1 - R), an LDPC code with a code length of 3888 is selected, and in this case, the number of LDPC codewords is 3.

S502: The first device sends coded information to the second device, and correspondingly, the second device receives the coded information.

The first device may select a parity-check matrix to be used from a plurality of defined LDPC code parity-check matrices based on the length *L*_{LDPC} of the LDPC codeword and the number *N*_{CW} of codewords, and encode to-be-sent information based on the selected check matrix. The first device sends the coded information to the second device. Correspondingly, the second device receives the coded information.

S503: The second device decodes the received coded information.

After receiving the coded information, the second device decodes the coded information. A decoding process of the second device is actually an inverse process of the procedure in FIG. 4. For example, the second device performs stream parsing on the coded information to obtain at least one LDPC codeword, and then decodes the coded information based on the at least one LDPC codeword. It may be understood that, the second device decodes, by using each LDPC codeword, information coded by using the LDPC codeword, to obtain a payload in the corresponding coded information. For a specific implementation in which the second device decodes, based on an LDPC codeword, information coded by using the LDPC codeword, refer to the conventional technology. Details are not described herein again.

In the foregoing embodiments provided in this application, the method provided in embodiments of this application is described by using an example in which the first device and the second device perform the method. In this application, embodiments may be independently implemented or may be implemented in combination based on some internal relationships. In each embodiment, different implementations may be implemented in combination or independently. To implement the functions in the method provided in embodiments of this application, the steps performed by the first device may be implemented by different functional entities that form the first device. The steps performed by the second device may be implemented by different functional entities included in the second device. The first device and the second aspect each may include a hardware structure and/or a software module, and implement the foregoing functions in a form of the hardware structure, the software module, or a combination of the hardware structure and the software module. Whether a function in the foregoing functions is performed by using the hardware structure, the software module, or the combination of the hardware structure and the software module depends on particular applications and design constraints of the technical solutions.

Based on a same inventive concept as the method embodiments, embodiments of this application provide a communication apparatus. The following describes, with reference to the accompanying drawings, communication apparatuses for implementing the foregoing method in embodiments of this application. All the foregoing content may be used in the following embodiments. Repeated content is not described in detail again.

FIG. 6 is a block diagram of a communication apparatus 600 according to an embodiment of this application. The communication apparatus 600 may be a device that needs to perform coding. For example, the communication apparatus 600 is the first device in the foregoing embodiment or a chip (system) in the first device. The communication apparatus 600 may correspondingly implement a function or a step implemented by the first device in the foregoing method embodiments. The communication apparatus 600 may be a device that needs to perform decoding. For example, the communication apparatus 600 is the second device in the foregoing embodiment or a chip (system) in the second device. The communication apparatus 600 may correspondingly implement a function or a step implemented by the second device in the foregoing method embodiments. The communication apparatus 600 may include a processing module 610 and a transceiver module 620. Optionally, communication apparatus may further include a storage module. The storage module may be configured to store instructions (code or a program) and/or data. The storage module may be, for example, a memory. The processing module 610 and the transceiver module 620 may be coupled to the storage module. For example, the processing module 610 may read the instructions (the code or the program) and/or the data in the storage module, to implement a corresponding method. When the communication apparatus 600 is the chip in the first device or the second device, the storage module may be a storage module in the chip, for example, a register or a cache. For example, the storage module may alternatively be a storage module that is in the first device or the second device and that is located outside the chip, for example, a read-only memory (read-only memory, ROM), another type of static storage device that can store static information and instructions, or a random access memory (random access memory, RAM). The foregoing units may be independently disposed, or may be partially or completely integrated.

The processing module 610 may be a processor or a controller, for example, may be a general-purpose central processing unit (central processing unit, CPU), a general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The processing module may implement or execute various example logical blocks, modules, and circuits described with reference to content disclosed in this application. Alternatively, the processor may be a combination for implementing a computing function, for example, a combination including one or more microprocessors, or a combination of a DSP and a microprocessor. The transceiver module 620 is a transceiver, an interface circuit, a bus, a pin, or another possible communication interface, and is configured to receive a signal from another apparatus. For example, when the apparatus is implemented in a form of a chip, the transceiver module 620 is an interface circuit used by the chip to receive a signal from another chip or apparatus, or is an interface circuit used by the chip to send a signal to another chip or apparatus.

In an implementation, the communication apparatus 600 can correspondingly implement the behavior and the functions of the first device in the foregoing method embodiments. For example, the communication apparatus 600 may be the first device, or may be a component (for example, a chip or a circuit) used in the first device, or may be a chip or a chip group in the first device or a part of a chip that is configured to perform a related method function, or may be a software module that can implement the method performed by the first device in the foregoing method. This is not limited. For details, refer to the related content in the foregoing method embodiments. Details are not described herein again.

For example, the processing module 610 is configured to: determine a number of coded bits corresponding to to-be-coded information, and determine a length of an LDPC codeword based on the number of coded bits. The to-be-coded information includes data information and parity information. The length of the LDPC codeword and the number of coded bits satisfy the following condition: when the number of coded bits is within a first value range, the length of the LDPC codeword is a first code length; or when the number of coded bits is within a second value range, if the number *N*_{avbits} of coded bits is greater than or equal to a sum of a bit length *N_{pld}* corresponding to the to-be-coded information and a first value, the length of the LDPC codeword is the first code length; or if the number *N*_{avbits} of coded bits is less than the sum of the bit length *N_{pld}* corresponding to the to-be-coded information and the first value, the length of the LDPC codeword is a second code length. The first value is a product of X and (1-R), where R is a coding rate, and X is a common multiple of denominators of all coding rates supported by a system. A maximum length of the LDPC codeword supported by the system is 1944×n, where n is an integer greater than or equal to 2, and both the first code length and the second code length are less than or equal to 1944×n; and/or X=Y+Zt, where Z is a least common multiple of the denominators of all the coding rates supported by the system, all the coding rates include 7/8, and t is an integer greater than or equal to -2 and less than or equal to 2. Y makes a proportion of parity bits punctured in a coding process to all parity bits less than a first threshold. The transceiver module 320 may be configured to send information obtained by coding the to-be-coded information.

In another implementation, the communication apparatus 600 can correspondingly implement behavior and functions of the second device in the foregoing method embodiments. For example, the communication apparatus 600 may be the second device, or may be a component (for example, a chip or a circuit) used in the second device, or may be a chip or a chip group in the second device or a part of a chip that is configured to perform a related method function, or may be a software module that can implement the method performed by the second device in the foregoing method. This is not limited. For details, refer to the related content in the foregoing method embodiments. Details are not described herein again.

For example, the transceiver module 620 is configured to receive information from the first device. The processing module 610 is configured to: perform stream parsing on the information to obtain at least one LDPC codeword, and decode the received information based on the at least one LDPC codeword.

In an optional implementation, when the maximum length of the LDPC codeword supported by the system is 1944×n, and the number of LDPC codewords is 1, the first value range and the first code length satisfy the following relationship: the first value range is (third code length, fourth code length], and the first code length is a maximum LDPC code length supported by the system. All LDPC code lengths supported by the system are sorted in ascending order, the third code length is a second-to-last LDPC code length after sorting, and the fourth code length is a last LDPC code length after sorting. For example, the first value range includes (1944×(n-1), 1944×n], and the first code length is 1944×n.

In an optional implementation, when the maximum length of the LDPC codeword supported by the system is 1944×n, and a number of LDPC codewords is a ratio of the bit length *N_{pld}* corresponding to the to-be-coded information to (1944×n×R), the first value range and the first code length satisfy any of the following relationships:
the first value range is (third code length+fourth code length, +∞], and the first code length is the fourth code length; or the first value range is (fourth code length-third code length, +∞], and the first code length is the fourth code length; or the first value range is (fourth code length-fifth code length, +∞], and the first code length is the fourth code length. All LDPC code lengths supported by the system are sorted in ascending order, the third code length is a second-to-last LDPC code length after sorting, the fourth code length is a last LDPC code length after sorting, and the fifth code length is a third-to-last code length in the LDPC code lengths supported by the system. For example, the first value range is (1944×(n+1), +∞], and the first code length is 1944×n; or the first value range is (1944×(n-1), +∞], and the first code length is 1944×n; or the first value range is (1944×(n+1)-648, +∞], and the first code length is 1944×n; or the second value range includes (1944×(n+2), +∞], and the first code length is 1944×n.

In an optional implementation, when the maximum length of the LDPC codeword supported by the system includes 1944×n, Z=12, and a number of LDPC codewords is 1, the second value range and the first code length satisfy the following relationship: the second value range is (fifth code length, third code length], and if *N*_{avbits} is greater than or equal to the sum of *N_{pld}* and the first value, the first code length is a maximum LDPC code length supported by the system. All LDPC code lengths supported by the system are sorted in ascending order, the third code length is a second-to-last LDPC code length after sorting, and the fifth code length is a third-to-last code length in the LDPC code lengths supported by the system. For example, when n=2, the second value range is (1944×(n+1)-648, 1944×(n-1)], X=2916+12t, and the first code length is 1944×n; or when n=3, the second value range is (1944, 1944×2], X=5832+12t, and the first code length is 1944×n.

In an optional implementation, when the maximum length of the LDPC codeword supported by the system includes 1944×n, Z=12, and the number of LDPC codewords is 2, the second value range and the first code length satisfy the following relationship: the second value range is (fourth code length, fourth code length+third code length], and if *N*_{avbits} is greater than or equal to the sum of *N_{pld}* and the first value, the first code length is a maximum LDPC code length supported by the system. All LDPC code lengths supported by the system are sorted in ascending order, the third code length is a second-to-last LDPC code length after sorting, and the fourth code length is a last code length in the LDPC code lengths supported by the system. For example, when n=2, the second value range is (1944×n, 1944×(n+1)], X=1944×(n+1)+12t, and the first code length is 1944×n; or when n=3, the second value range is (1944×n, 1944×(n+2)], X=1944×(n+2)+12t, and the first code length is 1944×n.

In an optional implementation, when the maximum length of the LDPC codeword supported by the system includes 1944×n, Z=12i, where i is an integer greater than or equal to 2, and a number of LDPC codewords is 1, the second value range and the first code length satisfy the following relationship: the second value range is (fifth code length, third code length], and if *N*_{avbits} is greater than or equal to the sum of *N_{pld}* and the first value, and X=Y+12i×t, the first code length is a maximum LDPC code length supported by the system. All LDPC code lengths supported by the system are sorted in ascending order, the third code length is a second-to-last LDPC code length after sorting, and the fifth code length is a third-to-last code length in the LDPC code lengths supported by the system. For example, the second value range is (1944×(n+1)-648, 1944×(n-1)], X=Y+12i×t, and the first code length is 1944×n, where i=2 or 3, and Y includes 2928; i=3, and Y includes 2916; or i=3, and Y includes 2952.

In an optional implementation, the second value range and the first code length further satisfy the following relationship: the second value range includes (0, 648], X=Y+12i×t, and the first code length is 1296, where i=2, and Y includes 912; i=3, and Y includes 936; or i=6, and Y includes 936; or the second value range includes (648, 1296], X=Y+12i×t, and the first code length is 1944, where i=2, and Y includes 1363; i=3, and Y includes 1376; or i=6, and Y includes 1512.

In an optional implementation, when the maximum length of the LDPC codeword supported by the system includes 1944×n, Z=12i, where i is an integer greater than or equal to 2, and the number of LDPC codewords is 2, the second value range and the first code length satisfy the following relationship: the second value range is (fourth code length, fourth code length+third code length], X=Y+12i×t, and the first code length is the fourth code length; or the second value range is (third code length, fourth code length-third code length], X=Y+12i×t, and the first code length is the third code length. All LDPC code lengths supported by the system are sorted in ascending order, the third code length is a second-to-last LDPC code length after sorting, and the fourth code length is a last code length in the LDPC code lengths supported by the system. For example, the second value range is (1944×n, 1944×(n+1)], X=Y+12i×t, and the first code length is 1944×n; or the second value range is (1944×n, 1944×(n+1)-648], X=Y+12i×t, and the first code length is 1944×(n-1).

When the communication apparatus 600 is a chip-type apparatus or a circuit, the transceiver module may be an input/output circuit and/or a communication interface, and the processing module is an integrated processor, a microprocessor, or an integrated circuit.

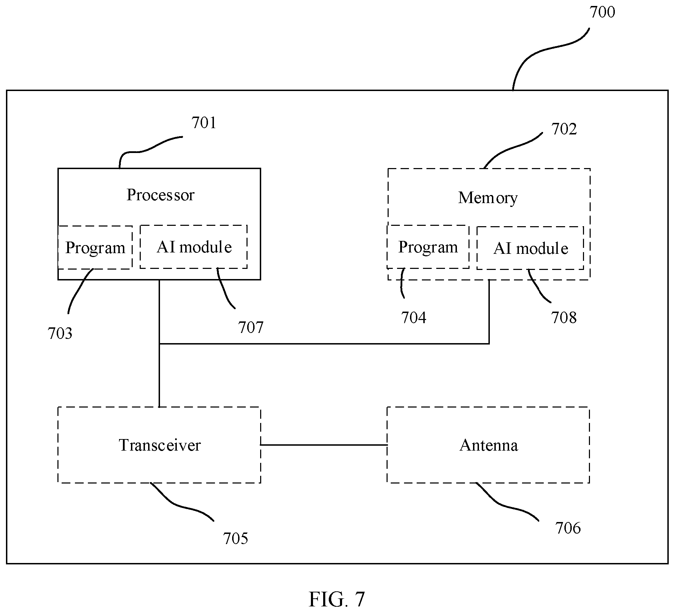

FIG. 7 is a block diagram of a communication apparatus 700 according to an embodiment of this application. The communication apparatus 700 may be the first device in the foregoing embodiment or a chip (system) in the first device. Alternatively, the communication apparatus 700 may be the second device in the foregoing embodiment or a chip (system) in the second device. In embodiments of this application, the chip system may include a chip, or may include a chip and another discrete component. For specific functions, refer to the descriptions of the foregoing method embodiments.

The communication apparatus 700 includes one or more processors 701, configured to implement or support the communication apparatus 700 in implementing functions of the first device in the method provided in embodiments of this application. For details, refer to detailed descriptions in the method examples. Details are not described herein again. The processor 701 may also be referred to as a processing unit or a processing module, and may implement a specific control function. The processor 701 may be a general-purpose processor, a dedicated processor, or the like. For example, the processor 701 includes a baseband processor, a central processing unit, an application processor, a modem processor, a graphics processing unit, an image signal processor, a digital signal processor, a video codec processor, a controller, a memory, and/or a neural network processor. The baseband processor may be configured to process a communication protocol and communication data. The central processing unit may be configured to control the communication apparatus 700 (for example, the first device), execute a software program, and/or process data. Different processors may be independent components, or may be integrated into one or more processors, for example, integrated into one or more application-specific integrated circuits.

In a design, the processor 701 may include a program 703 (which may sometimes also be referred to as code or instructions). The program 703 may run on the processor 701, to enable the communication apparatus 700 to perform the method described in the following embodiments. In another possible design, the communication apparatus 700 includes a circuit (not shown in FIG. 7), and the circuit is configured to implement functions of the first device in the foregoing embodiments.

In a design, the communication apparatus 700 may include one or more memories 702 storing a program 704 (which may sometimes also be referred to as code or instructions). The program 704 may run on the processor 701, to enable the communication apparatus 700 to perform the method described in the foregoing method embodiments.

In a design, the processor 701 and/or the memory 702 may include an artificial intelligence (artificial intelligence, AI) module 707 and an AI module 708. The AI module is configured to implement an AI-related function. The AI module may be implemented by using software, hardware, or a combination of software and hardware. For example, the AI module may include a RAN intelligent controller (RAN intelligent controller, RIC) module. For example, the AI module may be a near-real-time RIC or a non-real-time RIC.

In a possible design, the processor 701 and/or the memory 702 may further store data. The processor and the memory may be separately disposed, or may be integrated together.

In a possible design, the communication apparatus 700 may further include a transceiver 705 and/or an antenna 706. The processor 701 may sometimes also be referred to as a processing unit, and controls the communication apparatus 700. The transceiver 705 may sometimes also be referred to as a transceiver unit, a transceiver machine, a transceiver circuit, a transceiver device, or the like, and is configured to implement a transceiver function of the communication apparatus 700 through the antenna 706.

In a possible design, the communication apparatus 700 may further include one or more of the following components: a wireless communication module, an audio module, an interface for external memory, an internal memory, a universal serial bus (universal serial bus, USB) interface, a power management module, an antenna, a speaker, a microphone, an input/output module, a sensor module, a motor, a camera, a display, or the like. It may be understood that in some embodiments, the communication apparatus 700 may include more or fewer components, or some components may be integrated, or some components may be split. The components may be implemented by hardware, software, or a combination of software and hardware.

The communication apparatus in the foregoing embodiments may be a first device, or may be a circuit, or may be a chip used in the first device, or may be another combined component or part having the first device, or the like. When the communication apparatus is the first device, the transceiver module may be a transceiver, and may include an antenna, a radio frequency circuit, and the like; and the processing module may be a processor, for example, a CPU. When the communication apparatus is a chip system, the communication apparatus may be an FPGA, a dedicated ASIC, a system on chip (system on chip, SoC), a CPU, a network processor (network processor, NP), a DSP, a micro controller unit (micro controller unit, MCU), a programmable controller (programmable logic device, PLD), or another integrated chip. The processing module may be a processor of the chip system. The transceiver module or the communication interface may be an input/output interface or an interface circuit of the chip system. For example, the interface circuit may be a code/data read/write interface circuit. The interface circuit may be configured to receive code instructions (where the code instructions are stored in the memory, and may be directly read from the memory, or may be read from the memory through another component) and transmit the code instructions to the processor. The processor may be configured to run the code instructions to perform the method in the foregoing method embodiments. For another example, the interface circuit may alternatively be a signal transmission interface circuit between a communication processor and the transceiver machine.

An embodiment of this application further provides a communication system. Specifically, the communication system includes a first device and/or a second device. The first device is a device configured to implement a function related to the method shown in FIG. 5, and the second device is a device configured to implement a function related to the method shown in FIG. 5. For details, refer to the related descriptions in the foregoing method embodiments. Details are not described herein again.

An embodiment of this application further provides a computer-readable storage medium, including instructions. When the instructions are run on a computer, the computer is enabled to perform the method performed by the first device or the second device shown in FIG. 5.

An embodiment of this application further provides a computer program product, including computer program code. When the computer program code is executed, a computer is enabled to perform the method performed by the first device or the second device in the method shown in FIG. 5.

An embodiment of this application provides a chip system. The chip system includes a processor, may further include a memory, and is configured to implement functions of the first device or the second device in the foregoing method shown in FIG. 5. The chip system may include a chip, or may include a chip and another discrete component.

To implement the functions of the communication apparatuses in FIG. 6 and FIG. 7, an embodiment of this application further provides a chip, including a processor, configured to support the communication apparatuses in implementing the functions of the first device or the second device in the foregoing method embodiments. In a possible design, the chip is connected to a memory, or the chip includes a memory. The memory is configured to store a computer program or instructions and data that are necessary for the communication apparatus.

It should be understood that sequence numbers of the foregoing processes do not mean execution sequences in various embodiments of this application. The execution sequences of the processes should be determined based on functions and internal logic of the processes, and should not be construed as any limitation on the implementation processes of embodiments of this application.

A person of ordinary skill in the art may be aware that various illustrative logical blocks (illustrative logical block) and steps (step) described with reference to embodiments disclosed in this specification may be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiments are merely examples. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in an electrical form, a mechanical form, or another form.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

When the functions are implemented in a form of a software functional unit and sold or used as an independent product, the functions may be stored in a computer-readable storage medium. Based on such an understanding, the part of the technical solutions in this application essentially making contribution, or some of the technical solutions may be implemented in a form of a software product. The computer software product is stored in a storage medium and includes several instructions for instructing a computer device (which may be a personal computer, a server, a network device, or the like) to perform all or some of the steps in the methods in embodiments of this application. The foregoing storage medium includes any medium that can store program code, such as a USB flash drive, a removable hard disk, a ROM, a RAM, a magnetic disk, or an optical disc.

It is clear that a person skilled in the art can make various modifications and variations to this application without departing from the scope of this application. This application is intended to cover these modifications and variations of this application provided that they fall within the scope of protection defined by the following claims and their equivalent technologies.

## Claims

1. A communication method, comprising:
determining a number of coded bits corresponding to to-be-coded information, wherein the to-be-coded information comprises data information and parity information; and
determining a length of an LDPC codeword based on the number of coded bits, wherein the length of the LDPC codeword and the number of coded bits satisfy the following condition:
when the number of coded bits is within a first value range, the length of the LDPC codeword is a first code length; or
when the number of coded bits is within a second value range, if the number of coded bits is greater than or equal to a sum of a bit length corresponding to the to-be-coded information and a first value, the length of the LDPC codeword is the first code length; or if the number of coded bits is less than the sum of the bit length corresponding to the to-be-coded information and the first value, the length of the LDPC codeword is a second code length, wherein the first value is a product of X and (1-R), R is a coding rate, and X is a common multiple of denominators of all coding rates supported by a system, wherein
a maximum length of the LDPC codeword supported by the system is 1944×n, wherein n is an integer greater than or equal to 2, and both the first code length and the second code length are less than or equal to 1944×n; and/or X=Y+Zt, wherein Z is a least common multiple of the denominators of all the coding rates supported by the system, all the coding rates comprise 7/8, t is an integer greater than or equal to -2 and less than or equal to 2, and Y makes a proportion of parity bits punctured in a coding process to all parity bits less than a first threshold.

2. The method according to claim 1, wherein when the maximum length of the LDPC codeword supported by the system is 1944×n, and a number of LDPC codewords is 1, the first value range and the first code length satisfy the following relationship:
the first value range is (third code length, fourth code length], and the first code length is a maximum LDPC code length supported by the system, wherein all LDPC code lengths supported by the system are sorted in ascending order, the third code length is a second-to-last LDPC code length after sorting, and the fourth code length is a last LDPC code length after sorting.

3. The method according to claim 1 or 2, wherein when the maximum length of the LDPC codeword supported by the system is 1944×n, and a number of LDPC codewords is a ratio of the bit length corresponding to the to-be-coded information to (1944×n×R), the first value range and the first code length satisfy any of the following relationships:
the first value range is (third code length+fourth code length, +∞], and the first code length is the fourth code length; or
the first value range is (fourth code length-third code length, +∞], and the first code length is the fourth code length; or
the first value range is (fourth code length-fifth code length, +∞], and the first code length is the fourth code length, wherein
all LDPC code lengths supported by the system are sorted in ascending order, the third code length is a second-to-last LDPC code length after sorting, the fourth code length is a last LDPC code length after sorting, and the fifth code length is a third-to-last code length in the LDPC code lengths supported by the system.

4. The method according to any one of claims 1 to 3, wherein when the maximum length of the LDPC codeword supported by the system is 1944×n, Z=12, and a number of LDPC codewords is 1, the second value range and the first code length satisfy the following relationship:
the second value range is (fifth code length, third code length], and if the number of coded bits is greater than or equal to the sum of the bit length corresponding to the to-be-coded information and the first value, the first code length is a maximum LDPC code length supported by the system, wherein all LDPC code lengths supported by the system are sorted in ascending order, the third code length is a second-to-last LDPC code length after sorting, and the fifth code length is a third-to-last code length in the LDPC code lengths supported by the system.

5. The method according to any one of claims 1 to 3, wherein when the maximum length of the LDPC codeword supported by the system is 1944×n, Z=12, and a number of LDPC codewords is 2, the second value range and the first code length satisfy the following relationship:
the second value range is (fourth code length, fourth code length+third code length], and if the number of coded bits is greater than or equal to the sum of the bit length corresponding to the to-be-coded information and the first value, the first code length is a maximum LDPC code length supported by the system, wherein all LDPC code lengths supported by the system are sorted in ascending order, the third code length is a second-to-last LDPC code length after sorting, and the fourth code length is a last code length in the LDPC code lengths supported by the system.

6. The method according to any one of claims 1 to 4, wherein when the maximum length of the LDPC codeword supported by the system is 1944×n, Z=12i, wherein i is an integer greater than or equal to 2, and a number of LDPC codewords is 1, the second value range and the first code length satisfy the following relationship:
the second value range is (fifth code length, third code length], and if the number of coded bits is greater than or equal to the sum of the bit length corresponding to the to-be-coded information and the first value, and X=Y+12i×t, the first code length is a maximum LDPC code length supported by the system, wherein all LDPC code lengths supported by the system are sorted in ascending order, the third code length is a second-to-last LDPC code length after sorting, and the fifth code length is a third-to-last code length in the LDPC code lengths supported by the system, wherein i=2 or 3, and Y comprises 2928; i=3, and Y comprises 2916; or i=3, and Y comprises 2942.

7. The method according to claim 6, wherein the second value range and the first code length further satisfy the following relationship:
the second value range is (0, 648], X=Y+12i×t, and the first code length is 1296, wherein i=2, and Y comprises 912; i=3, and Y comprises 936; or i=6, and Y comprises 936; or
the second value range is (648, 1296], X=Y+12i×t, and the first code length is 1944, wherein i=2, and Y comprises 1363; i=3, and Y comprises 1376; or i=6, and Y comprises 1412.

8. The method according to any one of claims 1 to 7, wherein when the maximum length of the LDPC codeword supported by the system is 1944×n, Z=12i, wherein i is an integer greater than or equal to 2, and a number of LDPC codewords is 2, the second value range and the first code length satisfy the following relationship:
the second value range is (fourth code length, fourth code length+third code length], X=Y+12i×t, and the first code length is the fourth code length; or
the second value range is (third code length, fourth code length-third code length], X=Y+12i×t, and the first code length is the third code length, wherein
all LDPC code lengths supported by the system are sorted in ascending order, the third code length is a second-to-last LDPC code length after sorting, and the fourth code length is a last code length in the LDPC code lengths supported by the system.

9. A communication apparatus, comprising:
a processing module, configured to: determine a number of coded bits corresponding to to-be-coded information, and determine a length of an LDPC codeword based on the number of coded bits, wherein the to-be-coded information comprises data information and parity information, and the length of the LDPC codeword and the number of coded bits satisfy the following condition: when the number of coded bits is within a first value range, the length of the LDPC codeword is a first code length; or when the number of coded bits is within a second value range, if the number of coded bits is greater than or equal to a sum of a bit length corresponding to the to-be-coded information and a first value, the length of the LDPC codeword is the first code length; or if the number of coded bits is less than the sum of the bit length corresponding to the to-be-coded information and the first value, the length of the LDPC codeword is a second code length, wherein the first value is a product of X and (1-R), R is a coding rate, and X is a common multiple of denominators of all coding rates supported by a system; a maximum length of the LDPC codeword supported by the system is 1944×n, wherein n is an integer greater than or equal to 2, and both the first code length and the second code length are less than or equal to 1944×n; and/or X=Y+Zt, wherein Z is a least common multiple of the denominators of all the coding rates supported by the system, all the coding rates comprise 7/8, t is an integer greater than or equal to -2 and less than or equal to 2, and Y makes a proportion of parity bits punctured in a coding process to all parity bits less than a first threshold; and
a transceiver module, configured to send the to-be-coded information.

10. The apparatus according to claim 9, wherein when the maximum length of the LDPC codeword supported by the system is 1944×n, and a number of LDPC codewords is 1, the first value range and the first code length satisfy the following relationship:
the first value range is (third code length, fourth code length], and the first code length is a maximum LDPC code length supported by the system, wherein all LDPC code lengths supported by the system are sorted in ascending order, the third code length is a second-to-last LDPC code length after sorting, and the fourth code length is a last LDPC code length after sorting.

11. The apparatus according to claim 9 or 10, wherein when the maximum length of the LDPC codeword supported by the system is 1944×n, and a number of LDPC codewords is a ratio of the bit length corresponding to the to-be-coded information to (1944×n×R), the first value range and the first code length satisfy any of the following relationships:
the first value range is (third code length+fourth code length, +∞], and the first code length is the fourth code length; or
the first value range is (fourth code length-third code length, +∞], and the first code length is the fourth code length; or
the first value range is (fourth code length-fifth code length, +∞], and the first code length is the fourth code length, wherein
all LDPC code lengths supported by the system are sorted in ascending order, the third code length is a second-to-last LDPC code length after sorting, the fourth code length is a last LDPC code length after sorting, and the fifth code length is a third-to-last code length in the LDPC code lengths supported by the system.

12. The apparatus according to any one of claims 9 to 11, wherein when the maximum length of the LDPC codeword supported by the system is 1944×n, Z=12, and a number of LDPC codewords is 1, the second value range and the first code length satisfy the following relationship:
the second value range is (fifth code length, third code length], and if the number of coded bits is greater than or equal to the sum of the bit length corresponding to the to-be-coded information and the first value, the first code length is a maximum LDPC code length supported by the system, wherein all LDPC code lengths supported by the system are sorted in ascending order, the third code length is a second-to-last LDPC code length after sorting, and the fifth code length is a third-to-last code length in the LDPC code lengths supported by the system.

13. The apparatus according to any one of claims 9 to 12, wherein when the maximum length of the LDPC codeword supported by the system is 1944×n, Z=12, and a number of LDPC codewords is 2, the second value range and the first code length satisfy the following relationship:
the second value range is (fourth code length, fourth code length+third code length], and if the number of coded bits is greater than or equal to the sum of the bit length corresponding to the to-be-coded information and the first value, the first code length is a maximum LDPC code length supported by the system, wherein all LDPC code lengths supported by the system are sorted in ascending order, the third code length is a second-to-last LDPC code length after sorting, and the fourth code length is a last code length in the LDPC code lengths supported by the system.

14. The apparatus according to any one of claims 9 to 13, wherein when the maximum length of the LDPC codeword supported by the system is 1944×n, Z=12i, wherein i is an integer greater than or equal to 2, and a number of LDPC codewords is 1, the second value range and the first code length satisfy the following relationship:
the second value range is (fifth code length, third code length], and if the number of coded bits is greater than or equal to the sum of the bit length corresponding to the to-be-coded information and the first value, and X=Y+12i×t, the first code length is a maximum LDPC code length supported by the system, wherein all LDPC code lengths supported by the system are sorted in ascending order, the third code length is a second-to-last LDPC code length after sorting, and the fifth code length is a third-to-last code length in the LDPC code lengths supported by the system, wherein i=2 or 3, and Y comprises 2928; i=3, and Y comprises 2916; or i=3, and Y comprises 2942.

15. The apparatus according to claim 13, wherein the second value range and the first code length further satisfy the following relationship:
the second value range is (0, 648], X=Y+12i×t, and the first code length is 1296, wherein i=2, and Y comprises 912; i=3, and Y comprises 936; or i=6, and Y comprises 936; or
the second value range is (648, 1296], X=Y+12i×t, and the first code length is 1944, wherein i=2, and Y comprises 1363; i=3, and Y comprises 1376; or i=6, and Y comprises 1412.

16. The apparatus according to any one of claims 9 to 14, wherein when the maximum length of the LDPC codeword supported by the system is 1944×n, Z=12i, wherein i is an integer greater than or equal to 2, and a number of LDPC codewords is 2, the second value range and the first code length satisfy the following relationship:
the second value range is (fourth code length, fourth code length+third code length], X=Y+12i×t, and the first code length is the fourth code length; or
the second value range is (third code length, fourth code length-third code length], X=Y+12i×t, and the first code length is the third code length, wherein
all LDPC code lengths supported by the system are sorted in ascending order, the third code length is a second-to-last LDPC code length after sorting, and the fourth code length is a last code length in the LDPC code lengths supported by the system.

17. A communication apparatus, wherein the communication apparatus comprises a processor and a memory, the memory is configured to store a computer program, and the processor is configured to execute the computer program stored in the memory, to enable the communication apparatus to perform the method according to any one of claims 1 to 8.

18. A chip system, wherein the chip system comprises a processor and an interface, the processor is configured to invoke instructions from the interface and run the instructions, and when the processor executes the instructions, the method according to any one of claims 1 to 8 is implemented.

19. A computer-readable storage medium, wherein the computer-readable storage medium is configured to store a computer program, and when the computer program is run on a computer, the computer is enabled to perform the method according to any one of claims 1 to 8.

20. A computer program product, wherein the computer program product comprises a computer program, and when the computer program is run on a computer, the computer is enabled to perform the method according to any one of claims 1 to 8.
